# EUROPEAN PATENT SPECIFICATION

(11) **EP 2 000 223 B1**
(45) Date of publication and mention of the grant of the patent: **21.11.2018**
(21) Application number: 07730495.4
(22) Date of filing: 15.03.2007
(51) Int. Cl.: B09B 3/00, B08B 3/08, B29B 17/02, B29K 105/06, B29L 31/14, B29K 75/00, B29K 105/04

(54) **SYSTEM AND AUTOMATIC METHOD FOR EXTRACTION OF GASEOUS ATMOSPHERIC CONTAMINANTS WITH TOXIC PROPERTIES, WHICH ARE RETAINED IN POLYURETHANE FOAM (PUF) FILTERS**
SYSTEM UND AUTOMATISCHES VERFAHREN ZUR EXTRAKTION VON GASFÖRMIGEN ATMOSPHÄRISCHEN VERUNREINIGUNGEN MIT GIFTIGEN EIGENSCHAFTEN, DIE IN POLYURETHAN-SCHAUM-(PUF-)FILTERN FESTGEHALTEN WERDEN
SYSTÈME ET PROCÉDÉ D'EXTRACTION AUTOMATIQUE DE CONTAMINANTS ATMOSPHÉRIQUES GAZEUX POSSÉDANT DES PROPRIÉTÉS TOXIQUES, LEQUELS SONT RETENUS DANS DES FILTRES DE MOUSSE DE POLYURÉTHANNE (PUF)

(30) Priority: 16.03.2006 CL 200600588
(43) Date of publication of application: 10.12.2008
(73) Proprietor: UNIVERSIDAD TECNICA FEDERICO SANTA MARIA (USM), Valparaíso IV Region (CL)
(72) Inventor: CERECEDA BALIC, Francisco, Quilpué (CL); CERECEDA BALIC, Gabriel, V Región (CL); DOROCHESI FERNANDOIS, Mario, Viña del Mar (CL)
(74) Representative: ZBM Patents - Zea, Barlocci & Markvardsen
(86) International application number: PCT/ES2007/070055
(87) International publication number: WO 2007/104822

(56) References cited:
- EP-A1- 0 554 964
- EP-A1- 0 554 964
- DE-A1- 4 439 806
- DE-A1- 4 439 806
- DE-A1- 10 101 313
- DE-A1- 10 101 313
- ES-T3- 2 185 993
- JP-A- 2005 103 388
- US-A- 5 882 432
- US-A1- 2003 172 944
- US-B1- 6 306 222
- US-B1- 6 306 222

## Description

### FIELD OF THE INVENTION

The invention relates to a system and method of extraction of organic chemical compounds with toxic properties from polyurethane foam filters (PUF) in which they are retained, wherein the analytes of interest are gaseous atmospheric contaminants present in the ambient air. More specifically, it is described how to extract those chemical compounds from the filters in a mechanical and automatic manner, as a way to increase the quality of this analytical procedure.

### BACKGROUND OF THE INVENTION

At present time, there are not equipments in the market with these characteristics, and the procedures recommended in the literature or by the international environmental agencies are approached using classic methods and equipments, those usually used in analytical chemistry to extract analytes from materials and/or solid matrices such as PUF, using Soxhlet equipment (e.g. method EPA-3540). These equipments use large amount of solvents (measured in liters), long times of extraction (12 hours or days) and high energy expenses. Furthermore, they are not automatized, needing the presence of an operator for security reasons. The other existing alternative is to do the same extraction procedure in a manual form, which also implies the presence of an operator and the realization of repetitive mechanical movement that can lead to work related health problems (tendonitis). All the procedures previously described have low levels of efficiency, reproducibility and repetitiveness, and they also have low efficiency of extraction of the contaminants of interest.

In the document of de R. Niehaus, B. Scheulen, H. W. Dürbeck. (1990), Sci. Total Environ, 99:163-172. "Determination of airborne polycyclic aromatic hydrocarbons using a filter/adsorbed combination", it is described a glass apparatus for the extraction of analytes from a PUF, by manual compression and decompression of a PUF immersed in organic solvent. The glass apparatus has a cylindrical form, surrounded by a concentric double sleeve, with a superior and inferior opening for hot water circulation inside the sleeve as a manner to increase the temperature in the cylinder and facilitate the extraction of analytes from the PUF. The investigation compares the efficiency of the traditional procedure with this new concept of extraction with solvent, using manual compression and decompression of a PUF. The work does not mention the automatization of any step of the process, or the optimization of the extraction procedure considering frequency of compression and decompression, extraction program (intervals between pressure application and pauses and total time of extraction), reproducibility, repetitiveness, quantity and sequence of solvents, and also the consideration of using solvent sweeping, among others.
Document US2003172944 describes methods for manufacturing a filter and pre-treated polyurethane foam filters to form PUF filters using Soxhlet extraction. Document US5882432 describes an efficient continuous dryer for flexible polyurethane foam and cleaning apparatus. Document EP0554964 describes a method and device for degassing solid polyurethane foam by grinding and compacting the foam. Document DE10101313 describes a filtration method and device for separating solid, liquid or dissolved substances from a fluid. Document US6306222 describes a process for cleaning plastics for recycling them. And document DE4439806 a process to clean and dispose of used filter plugs.

As a consequence, it is necessary to automatize the extraction procedure, to allow the reduction of solvent volume to milliliters, the time to minutes and to obtain superior extraction efficiencies, and notably improving the reproducibility and security of operation, all factors that also lead to an important reduction of costs

### SUMMARY OF THE INVENTION

The objective of this work is to develop a system of extraction of organic chemical compounds with toxic properties, such as Polycyclic Aromatic Hydrocarbons (PAHs) and Polychlorinated Biphenyls (PCBs), contaminants present in gaseous atmospheric samples (ambient air). The air samples are made up of a solid phase mixture consisting of particulate matter (PM), and a gaseous phase. The devices for taking air samples collect the samples on different types of filters, using polyurethane foam filters (PUF) to retain the gaseous phase, which is extracted using organic solvents. The invention is aimed to develop a mechanical and automatic method to extract analytes from those filters, in order to increase the extraction efficiency, and the reproducibility and repetitiveness of the analytical procedure; using a reduced volume of solvents and shorter time of extraction (cost reduction).

The automatic extraction system of gaseous atmospheric contaminants (PAHs PCBs) retained in PUF, comprises two devices with complementary functions:

The first one is an extraction device, which allows the extraction of chemicals of interest using a sequence of organic solvents where the PUF must be immersed. The process of extraction is based on compression and decompression cycles of the PUF using a mechanical-pneumatic piston, which is assisted by valves and oil-free compressors that are regulated by a PLC, which permits the automatic programming of the desired sequence to achieve maximum extraction efficiency. The device design takes into account luminous and acoustic security signals to indicate the end of the process, and also filters and eliminators of possible residues that could contaminate the extraction process. This device is useful to prepare the sample material (PUF) for gases present in atmospheric aerosols, to clean the PUF before usage in sampling and after sampling, and also to extract the compounds of interest retained in the filter. The second device, complementary to the previous one, consists of a hermetic container with entrance and exit valves which allow drying the cleaned PUF, from the previous process, by means of solvent sweeping with hot ultra-pure gaseous N₂, eliminating the solvent to obtain a dry PUF. The process of cleaning a drying of the PUF is chromatographically certified and the PUF is stored in a hermetic container to avoid posterior contamination.

None of these equipments can be found in the market today. The original and automatized form of extraction of analytes from those PUF filters allows overcoming many of the typical deficiencies of the traditional systems and is a step forward in the state of the art related to extraction systems for solid samples, and especially for the previously described use.

Therefore, one of the main objectives of the present invention is to provide an automatic extraction system of gaseous atmospheric contaminants according to the appended apparatus claims.

The mechanic-pneumatic piston permits to carry out the procedure of compression and decompression, this is accomplished by compression of ambient air using an oil-free pressure pump with Teflon membrane, which sends the compressed air through rapid connection tubes of the entrance valve in the piston; the lubrication of the piston is accomplished with a minuscule layer of oil formed on the piston rod, which comes from an oil deposit that allows the formation of an air aerosol containing very small oil particles in suspension. Two measures have been implemented to avoid any possible contamination from the oil of the system: the first one lies in the Teflon fastener located at the inferior end of the piston rod, which has a small sealed conicity in its superior piece, thus the conicity traps any possible drop from the layer of oil that might fall from the piston rod and avoids the contamination of the inferior end of the Teflon fastener; besides, the two parts that form the Teflon fastener are independent, consequently the contamination avoidance by this route is guaranteed, preventing the accidental contamination of rod of the glass compression blade that works over the PUFs; and the second measure is an oil trap located at the end of the tube that connects the rapid connection of the exit valve for compressed air of the piston with the trap; this washable and takedown trap is connected to an exit to eliminate the residual compressed air from the system to the exterior in a definitive manner; furthermore, the pneumatic piston has a regulation screw at the entrance and exit of the compressed air, those screws can mechanically regulate the movement of the piston rod and thus, fit the glass container for PUF extraction to different types of PUF (different sizes and densities), to different extraction solvents volumes, and different extraction procedures as well; this regulation can also control the magnitude of pressure applied to the PUF during the compression and expansion steps with the purpose of improving the efficiency of extraction; the mechanical-pneumatic piston uses compressed air to work, hence an exit tube transports the pressurized air to the piston entering through the valve, the return air exits through the valve and is leaded by a tube to the entrance in the control unit; to lubricate the piston, a device mixes the air, which has been compressed by the oil-free pressure pump with Teflon membrane, with a small amount of oil, the air thus prepared is transported to an solenoid valve, which is connected to an exit tube directed to the piston, the residual air that is discarded once has passed through the piston, exits the control unit through a tube and reaches the oil trap.

The control unit controls numerous solenoid valves, which permit to perform the movement of the piston by means of a PLC, this digital microprocessor has a LCD screen and allows the programming of different PUF extraction procedures by means of increasing the compression, based in a higher or lower pressure of the piston controlling the amount of air being compressed, furthermore the control unit has a series of electronic elements such as differentials, acoustic and luminous alarms that indicate the ending of an operation sequence and thus they permit to determine the time intervals for pressure versus pauses, and the total time of extraction; it allows the use PUFs with different thickness and/or densities; it allows additionally compressing the PUF to leave it as free as possible of extraction solvents, among others.

The metallic support consists of a cylindrical duraluminium support screwed to an iron base inserted in a plastic platform, which allows fixing the mechanical-pneumatic piston to the cylindrical fastener of the extraction system; the cylinder has in its upper part a fastener screw, which allows the regulation of the height at which the fastener support of the mechanical-pneumatic piston will be placed; the mechanical-pneumatic piston is screwed and secured to the cylindrical support on a small sheet metal, regulation screws allow controlling the movement of the piston rod; plastic circular clamps support the glass container for PUF extraction, from its upper and also from its lower part; the plastic circular clamps have two parts, one that surrounds the cylinder, with a winged thread bolt for fastening and security and a second part that surrounds the glass container for PUF extraction.

The glass container for PUF extraction is built of borosilicate glass and has a mouth that permits the insertion of the PUF in the extraction system; this mouth is a ground glass conical female which fits an upper part consisting in a ground glass conical male that allows the hermetic closure of the extraction container to avoid solvent spills during the extraction; also and to avoid overpressures produced by the evaporated solvent during the process of compression and expansion of the PUF, the upper part is provided with a Teflon valve that can be opened at will during the process; furthermore, to introduce new portions of solvent or to change the extraction solvent, the same upper part is provided with a ground conical female, which has a ground conical male glass lid that allows the hermetic closure of the extraction container anew, once such solvent has been introduced; a glass male mouth with exterior thread permits joining the Teflon piece that works as guide for the rod of the compression blade so it can be inserted and moved in the right form and vertically inside the body of the glass container for PUF extraction; once the PUF has been extracted, the extraction solvent must be removed from the extraction container, for that purpose it is provided a Teflon valve joined to a ground glass conical male that allows a direct connection to the extraction container, thus when the Teflon valve is opened, the liquid is poured directly into a distillation round bottom flask that has a mouth compatible with the ground conical glass male, this glass male has an open hose connector, which permits to even up the pressures during the elimination of the extraction solvent from the extraction container, facilitating the flow of liquid to the distillation flask.

The drying device consists in a container for drying the PUF and a line to supply hot ultra-pure nitrogen (N₂).

The drying device for the PUF comprises a lid that has an upper part with a wedge for coupling with the lower part and it has a groove where it can be placed a silicone o-ring. This o-ring is useful to hold tight and hermetic a transparent glass that is adjusted in the wedge between the upper and lower part of the lid and it is used as a window to observe the drying process; the lower part also has a groove to place a silicone o-ring similar to the previous one in form and function; in the center of the glass window there is a metallic male with an interior and exterior sweglook thread for connection to the hot N₂ line by means of a sweglook nut, which allows the entrance of the N₂ to the drying container for the PUF; this N₂ entrance connection is hermetically sealed against the glass by means of a lock nut that has an exterior thread which permits to screw it to the metallic male, furthermore both pieces are sealed against the glass using o-rings with appropriate diameters; for the drying procedure, the PUFs are placed on a PUF support located inside the lower part of the drying container for the PUF, or body of the container; the lid and the body of the container are coupled by means of metallic fasteners, which can be adjusted to achieve maximum tightness, and consequently obtain an hermetic sealing of the drying container for the PUF.

The line of hot ultra-pure nitrogen (N₂) supply consists of a N₂ cylinder with a predetermined pressure, which is reduced using a secondary manometer at 400 kPa (4 bars), a pipe with N₂ at 400 kPa (4 bars) reaches an extraction hood and connected to it by means of a needle valve for coarse flow regulation, which is at the same time connected to a needle valve for fine flow regulation; the line for hot nitrogen N₂ supply is at the same time connected and regulated by the valve, the thermal regulation (9) of this line is achieved thanks to a blanket provided with electric resistances regulated and controlled by a thermostat, which keeps the temperature of this line at approximately 70 °C; in this manner the drying of the PUF is accomplished by means of removing the residual solvent retained in the PUF using a process of sweeping with N₂, the heating of the N₂ helps to evaporate the solvent and as a consequence notably reduces the drying time, and the N₂ that has passed through the PUF is eliminated by a regulation valve through a hose to the interior of the extraction hood.

The PUF support consists of a first support for the PUF of a first diameter which rests on a metallic grid with perforations of 1 cm; the first support is supported by cylindrical legs that separate it from the second support which has the same dimensions of the first one, but used for PUFs with a second diameter, smaller than the first diameter; this second support is also rested on some cylindrical legs to separate it from the bottom of the drying container for the PUF.

The other main objective of this invention is to provide an automatic method of extraction of gaseous atmospheric contaminants according to the appended method claims.

The step of extraction of chemical compounds of interest using a sequence of organic solvents where the PUF must be immersed, by means of an extraction process based in compression and decompression cycles of the PUF; it is accomplished by means of a mechanical-pneumatic piston; a control unit for solenoid valves, which allow controlling the piston movement; a metallic support; and a glass container for PUF extraction fastened to such metallic support. Such mechanical-pneumatic piston permits to carry out the compression and decompression procedure, this is accomplished by compression of ambient air using an oil-free pressure pump with Teflon membrane, which sends the compressed air through tubes to the rapid connection of the entrance valve in the piston; the lubrication of the piston is accomplished with a minuscule layer of oil formed on the piston rod, which comes from an oil deposit that allows the formation of an air aerosol containing very small oil particles in suspension. Two measures have been implemented to avoid any possible contamination from the system oil: the first one lies in the Teflon fastener located at the inferior end of the piston rod, which has a small sealed conicity in its superior piece, and that conicity traps any drop from the layer of oil that might fall from the piston rod and avoids the contamination of the inferior end of the Teflon fastener; besides, the two parts that form the Teflon fastener are independent, consequently the contamination avoidance by this route is guaranteed, preventing the accidental contamination of rod of the glass compression "*paleta*" that works over the PUFs; and the second measure is an oil trap at the end of the tube that connects itself with the rapid connection of the exit valve for the compressed air of the piston; this washable and takedown oil trap is connected to an exit that definitively eliminates the residual compressed air from the system to the exterior; furthermore, the pneumatic piston has a regulation screw at the entrance and at the exit of the pressurized air, those screws can mechanically regulate the movement of the piston rod and in this way, fit the glass container for PUF extraction to PUFs with different characteristics (different sizes and densities), different extraction solvent volumes, and different extraction procedures; this regulation can also modify the magnitude of pressure applied to the PUF during the compression and expansion steps as means of improving the efficiency of extraction; the mechanical-pneumatic piston uses compressed air to work, hence an exit tube transports the pressurized air to the piston entering through the valve, the return air exits through the valve and is leaded by a tube to the entrance in the control unit; to lubricate the piston, a device mixes the air, which has been compressed by the oil-free pressure pump with Teflon membrane, with a small amount of oil, the air thus prepared is transported to a solenoid valve, which is connected to an exit tube directed to the piston, the residual air that is discarded once has passed through the piston, exits the control unit through a tube and reaches the oil trap.

The control unit controls numerous solenoid valves, which permit to perform the movement of the piston by means of a PLC, this digital microprocessor has a LCD screen and allows programming of different forms of PUF extraction by means of increasing the compression, based in a higher or lower pressure of the piston controlling the amount of compressed air, furthermore the control unit has a series of electronic elements such as differentials, acoustic and luminous alarms that indicate the ending of an operation sequence and as a result they permit to determine the pressure time intervals versus pauses, and the extraction total time; it allows the use PUFs with different thickness and/or densities; it allows the compression of the PUF to leave it as free as possible of extraction solvents, among others.

The metallic support consists of a cylindrical duraluminium support screwed to an iron base inserted in a plastic platform, which allows fixing the mechanical-pneumatic piston to the cylindrical fastener of the extraction system; the cylinder has in its upper part a fastener screw, which allows the regulation of the height at which the fastener support of the mechanical-pneumatic piston will be placed; the mechanical-pneumatic piston is screwed and secured to the cylindrical support on a small sheet metal, regulation screws allow to control the movement of the piston rod; plastic circular clamps support the glass container for PUF extraction, from its upper and also its lower part; the plastic circular clamps have two parts, one that surrounds the cylinder, with a winged thread bolt for fastening and security and a second part that surrounds the glass container for PUF extraction.

The glass container for PUF extraction is built of borosilicate glass and has a mouth that permits the insertion of the PUF in the extraction system; this mouth is a ground glass conical female which fits an upper part consisting in a ground glass conical male that allows the hermetic closure of the extraction container to avoid solvent spills during the extraction; also and to avoid overpressures produced by the evaporated solvent during the process of compression and expansion of the PUF, the upper part is provided with a Teflon valve that can be opened at will during the process; furthermore, to introduce new portions of solvent or to change the extraction solvent, the same upper part is provided with a ground conical female, which has a ground conical male glass lid that allows the hermetic closure of the extraction container anew, once such solvent has been introduced; a glass male mouth with exterior thread permits joining the Teflon piece that works as guide for the rod of the compression blade so it can be inserted and moved in the right form and vertically inside the body of the glass container for PUF extraction; once the PUF has been extracted, the extraction solvent must be removed from the extraction container, for that purpose it is provided a Teflon valve joined to a ground glass conical male that allows a direct connection to the extraction container, thus when the Teflon valve is opened, the liquid is poured directly into a distillation round bottom flask that has a mouth compatible with the ground conical glass male, this glass male has an open hose, which permits to even up the pressures during the elimination of the extraction solvent from the extraction container, facilitating the flow of liquid to the distillation flask.

The step for drying the cleaned PUF, by means of solvent sweeping with hot gaseous ultra-pure N₂, eliminating the solvent until the PUF is dry; it is accomplished with the use of a drying container for the PUF; and a line for hot gaseous ultra-pure nitrogen (N₂) supply.

The drying container for the PUF comprises a lid that has an upper part with a wedge for coupling with the lower part and it has a groove to accommodate a silicone o-ring. This o-ring is useful to hold tight and hermetic a transparent glass that is adjusted in the wedge between the upper and lower part of the lid and it is used as a window to observe the drying process; the lower part also has a groove to accommodate a silicone o-ring similar to the previous one in form and function; the glass window has on its center a metallic male with an interior and exterior sweglook thread for connection to the hot N₂ line by means of a sweglook nut, which allows the entrance of the N₂ to the drying container for the PUF; this N₂ entrance connection is hermetically sealed against the glass by means of a lock nut that has an exterior thread which allows screwing it to the metallic male, furthermore both pieces are sealed against the glass using o-rings of appropriate diameters; for the drying procedure, the PUFs are placed on a PUF support located inside the lower part of the drying container for the PUF, or body of the container; the lid and the body of the container are coupled by means of metallic fasteners, which can be adjusted to achieve maximum tightness, and consequently to obtain an hermetic sealing of the drying container for the PUF.

The line of hot ultra-pure nitrogen (N₂) supply consists of a N₂ cylinder with a predetermined pressure, which is reduced using a secondary manometer at 400 kPa (4 bars), a pipe with N₂ at 400 kPa (4 bars) reaches an extraction hood and connects to it by means of a needle valve for coarse flow regulation, which is at the same time connected to a needle valve for fine flow regulation; the line for hot nitrogen N₂ supply is at the same time connected and regulated by the valve, the thermal regulation of this line is achieved thanks to a blanket provided with electric resistances regulated and controlled by a thermostat, which keeps the temperature of this line at approximately 70 °C; in this manner the drying of the PUF is accomplished by means of removing residual solvent retained in the PUF using a process of sweeping with N₂, the heating of the N₂ helps to evaporate the solvent and as a consequence notably reduces the drying time, and the N₂ that has passed through the PUF is eliminated by a regulation valve through a hose to the interior of the extraction hood.

The PUF support consists of a first support for the PUF of a first diameter which rests on a metallic grid with perforations of 1 cm; the first support is supported by cylindrical legs that separate it from the second support which has the same dimensions of the first one, for the PUFs with a second diameter, smaller than the first diameter; this second support is also rested on some cylindrical legs to separate it from the bottom of the drying container for the PUF.

Once the PUF has been cleaned and dried, it is necessary to store it so it does not get contaminated before it reaches the sampling location.

The automatic extraction equipment can be used for the extraction of PUFs which come from an ambient air sampling event, as well as to clean a PUF from residual contaminants originated from the manufacture process before its use in field sampling, and also as a form to guarantee that the PUF is clean at the time of taking the atmospheric sample.

### BRIEF DESCRIPTION OF THE DRAWINGS

Figure 1A shows a schematic diagram of the automatic extraction system for gaseous atmospheric samples.
Figure 1B shows the automatic extraction system for atmospheric samples of the invention.
Figure 2 shows the fastener system for the glass rod of the compression blade of the automatic extraction system of the invention.
Figure 3 shows the duraluminium support that allows the attachment of the mechanical-pneumatic piston to the cylindrical fastener of the extraction system of the invention.
Figures 4A and 4B show the fastener system of the arm and the support for the pneumatic piston of the extraction system of the invention.
Figures 5A and 5B show the clamp that holds the glass body of the extraction system of the invention, its lower and upper view respectively.
Figure 6 shows a three-dimensional view of the automatic extraction system for gaseous atmospheric samples of the invention.
Figure 7 shows a complete three-dimensional view of the glass body of the automatic extraction system for gaseous atmospheric samples of the invention.
Figure 8 shows an arrangement of the components of the drying system for the PUF, to be used in the collection of gaseous atmospheric samples of the invention.
Figure 9 shows the drying system for the PUF assembled with all its components.
Figure 10 shows a transversal cut of the extraction container for the PUFs.
Figure 11 shows a scheme of the drying system of the PUF.
Figure 12 shows a scheme of the component parts of the drying container for the PUF.
Figure 13 shows a transversal cut of the component parts of the drying container for the PUF.
Figures 14A and 14B show the component parts of the PUF support.
Figures 15A and 15B show an isometric view of the drying container for the PUF and the same container closed respectively.

### DESCRIPTION OF THE PREFERRED EMBODIMENTS

The automatic extraction system for gaseous atmospheric contaminants (PAHs and PCBs) retained on PUF, comprises two devices with complementary functions.

The first one is an extraction device, which allows the extraction of chemicals of interest using a sequence of organic solvents where the PUF must be immersed. This device consists in an automatic extraction system for chemical compounds at trace level, contaminants present in gaseous atmospheric samples (ambient air).

The second device, complementary to the previous one, is a drying device for the PUF, which consists of a hermetic container with entrance and exit valves to allow drying the cleaned PUF, obtained from the previous process, by means of solvent sweeping with hot ultra-pure gaseous N₂, eliminating the solvent until the PUF is dry. The process of cleaning and drying of the PUF is chromatographically certified and the PUF is stored in a hermetic container to avoid posterior contamination.

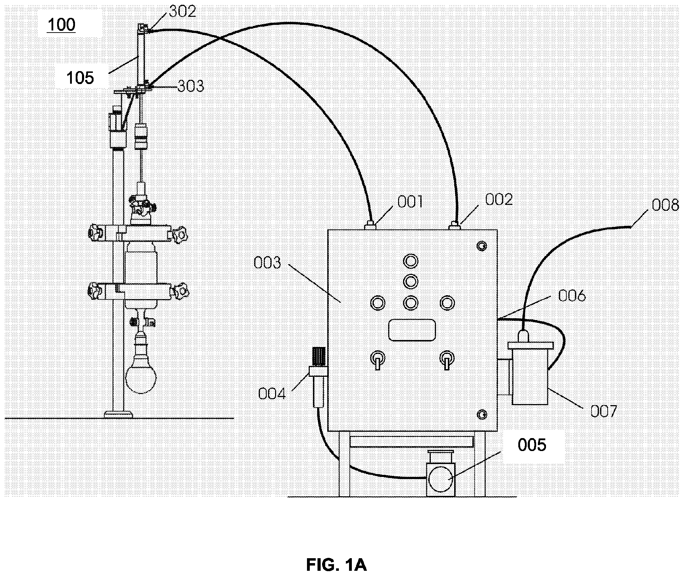

As schematically shown in figure 1A, the extraction system (100) is based in the action of a mechanical-pneumatic piston (105) which uses compressed air to work, with that purpose there is an exit tube (001) that drives the pressurized air to a piston (105) entering through an entrance valve (302). The return air comes out from an exit valve (303) and it is directed by means of a tube to the entrance (002) in a control unit (003). To lubricate the piston, the air compressed by an oil-free pressure bomb with Teflon membrane (005) is mixed with a minimal amount of oil in a device (004). The air thus prepared is transported to a solenoid valve (not shown), which is connected to the exit tube (001) in direction to the piston (105). The control unit (003) of the solenoid valves, which allow the movement of the piston with the help of a PLC (not shown), this digital microprocessor has a LCD screen and permits to program different forms of PUF extraction by means of increasing the compression, based on higher or lower piston pressure controlling the amount of air being compressed. Furthermore, the control unit (003) has a series of electronic elements, such as differentials, acoustic and luminous alarms that indicate the ending of an operation sequence, etc. The residual air that is discarded once it has passed through the piston (105), comes out of the control unit (003) through a tube (006) and reaches an oil trap (007). This takedown and washable oil trap (007) is connected to an exit tube (008), as a form to definitively eliminate the residual compressed air from the system to the exterior, by this means avoiding the permanence of contaminated air inside the laboratory where the extraction system for the PUF is being used.

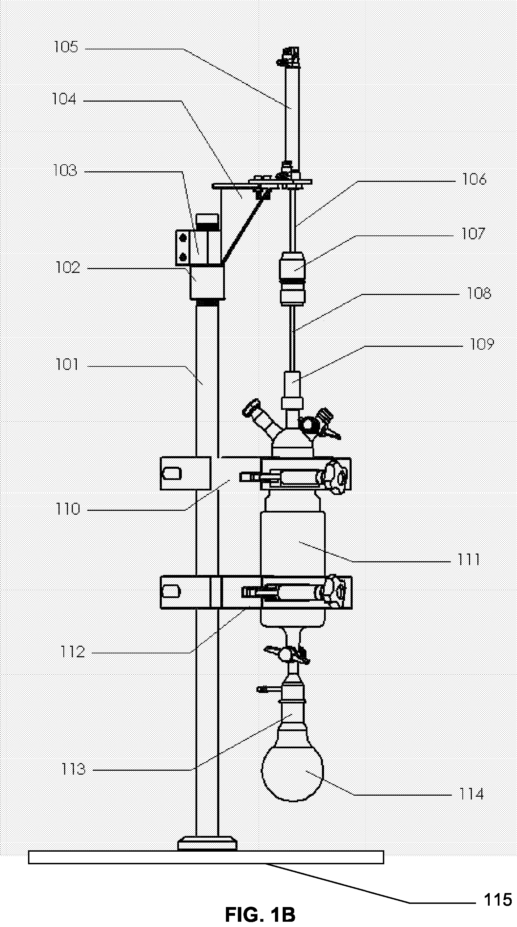

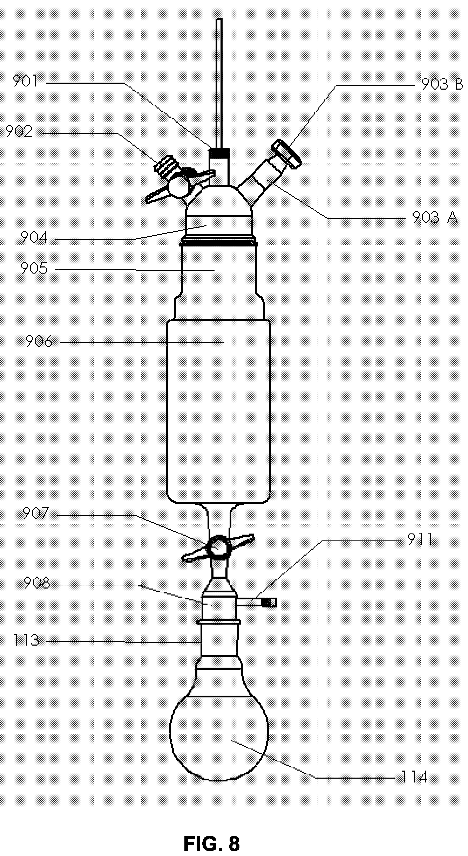

Figure 1B shows the component parts of the extraction device (100), which is made up of a vertical cylindrical duraluminium support (101) which is screwed to an iron base (115) inserted in a plastic platform (not shown). The cylindrical support (101) has a fastener screw (102) in its upper part, which allows the regulation of the height at which the fastener support (103) of the mechanical-pneumatic piston (105) will be placed. The mechanical-pneumatic piston (105) is screwed and secured to the cylindrical support (101) on a small sheet metal (104), regulation screws (302, 303) allow controlling the movement of the piston (105) rod (106). In the lower part of this rod is located a Teflon fastener (107) that has a mechanism to secure the stem of the compression glass blade (108) which acts over the PUFs as shown later. A glass container for the PUF extraction (111) has a glass male element with thread, in which a Teflon adapter (109) is connected and works as a guide for the proper and vertical entrance of the compression glass blade (108) to the interior of the extraction system (111). The glass container for extraction of the PUF (111) is fastened to the cylindrical duraluminium support (101) by means of two plastic circular clamps (110, 112) which are lined with cork sheets and supplied with winged thread bolts for fastening and security. At one extreme, the extraction container (111) has a the ground conical glass male element (908) (see figure 8), NS29/32, which allows to connect a distillation round bottom flask (114) which has ground conical glass female mouth (113), NS29/32 directly to the extraction container.

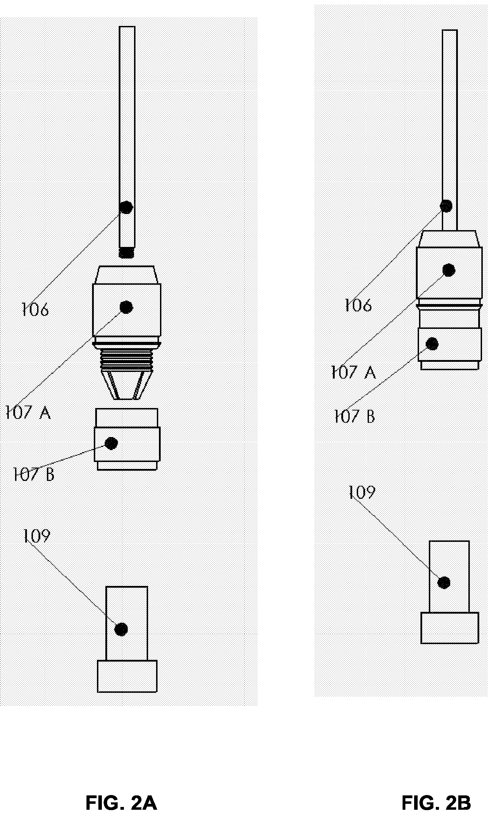

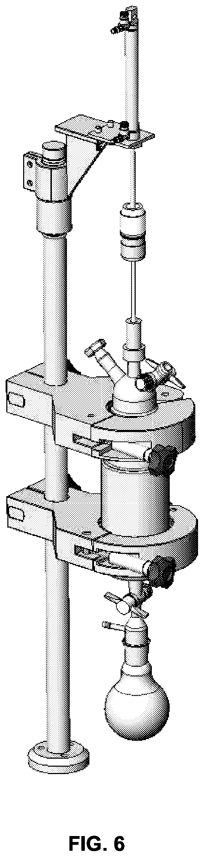

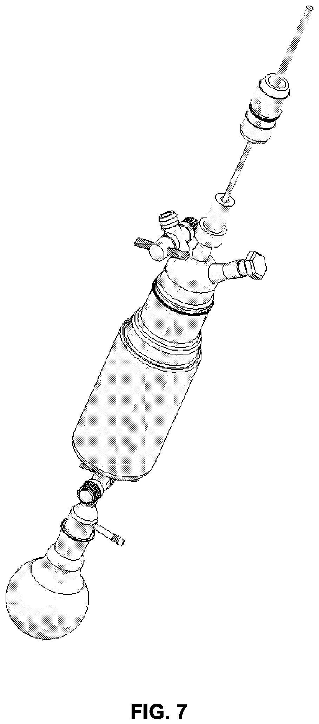

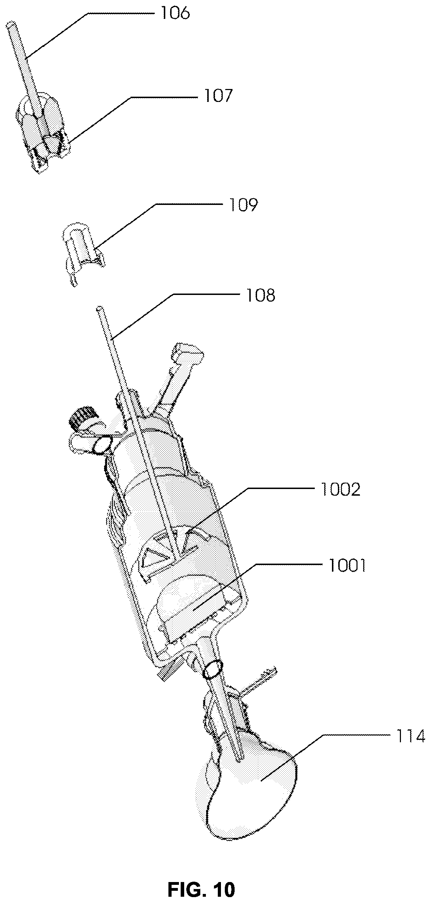

Figures 2A and 2B show the detailed Teflon fastener (107). Figure 2A shows that the Teflon fastener (107) consists of two parts, the upper part (107A) which has a female thread in the upper cylindrical part where the extreme of the piston (105) rod (106) is screwed, and a male thread in the inferior part that ends in a conical extreme with small flexible openings that can be closed when the inferior part (107B) is screwed. This last one has a female thread in the cylindrical part, the rest of the cylinder accommodates the conical extreme of the upper part (107A). By this means, when the two parts are closed, the rod of the glass compression blade (108) (see figure 10) is left pressed by the fastener system, preventing it from sliding while the pneumatic piston (105) is performing its mechanical work. The Teflon adapter (109) works as a guide to permit the proper vertical entrance of the rod of the compression blade (108) into the glass container for the PUF extraction (111) (see figures 6, 7, 8 and 10). Figure 2B shows the closed Teflon fastener (107) and the piston (105) rod (106) connected to the upper part of the Teflon fastener (107).

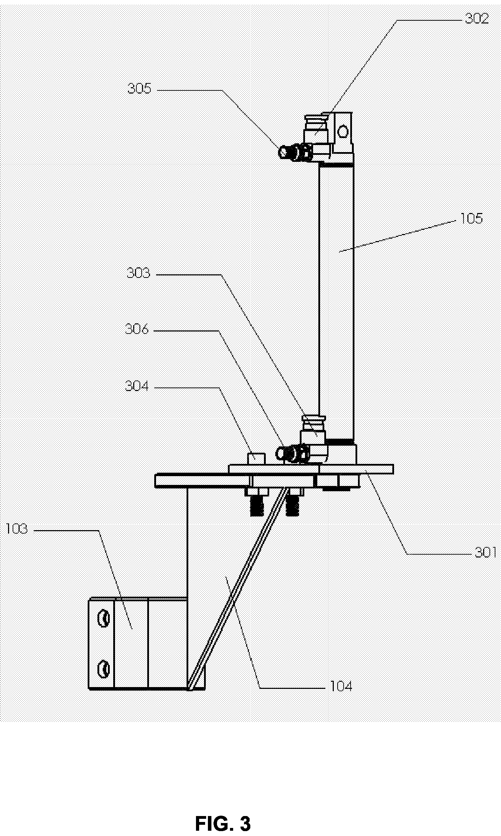

Figure 3 shows the pneumatic piston (105) in detail. The metallic support (104) sustains an aluminium sheet metal (301) that allows holding the piston (105) by a screw (304). The action of the pneumatic piston (105), allows to carry out the compression and decompression procedure on which the developed extraction method is based, this is achieved by means of compression of ambient air by an oil-free pressure bomb with Teflon membrane (005) which sends this compressed air through 1 cm diameter Tygon tubes (001, 002) to the rapid connection of the entrance valve in the piston (302). The lubrication of the piston is accomplished with a minuscule layer of oil formed on the piston rod, which comes from an oil deposit (004) that allows the formation of an air aerosol containing very small oil particles in suspension; this permits the lubrication of the piston. Two measures have been implemented to avoid any possible contamination with the oil: the first one consists in the Teflon fastener (107) located at the inferior end of the piston (105) rod (106), which has a small sealed conicity in its superior piece (107A), thus the conicity traps any minute drop that might fall from the layer of oil present on the piston (106) rod and avoids the contamination of the inferior end of the Teflon fastener system (107B). Moreover, the two parts that form the Teflon fastener (107) are independent, consequently the contamination avoidance by this route is guaranteed, preventing the accidental contamination of the rod of the glass compression blade (108) that works over the PUFs; and the second measure is an oil trap (007) at the end of the tube (006) that connects the rapid connection of the exit valve of the compressed air (303) of the piston (105) with the trap (007). This washable and takedown oil trap (007) is connected to an exit which can be joined to a tube (008) to definitively eliminate the residual compressed air from the system to the exterior.

All the control system (003) of the solenoid valves (not shown) which permit to perform the movement of the piston is done with the help of a PLC, this digital microprocessor has a LCD screen and allows programming different PUF extraction procedures by means of increasing the compression, based on a higher or lower pressure of the piston controlling the amount of air being compressed. Furthermore, the pneumatic piston has a regulation screw at the entrance (305) and at the exit (306) of the pressurized air, the movement of the piston (106) rod can be mechanically regulated with these screws and in this form the glass container for PUF extraction (111) can be adjusted to different PUF characteristics (different sizes and densities); to different volumes of extraction solvent, and also to different extraction procedures. With this regulation it can also be modified the intensity of the pressure applied to the PUF during the compression and expansion steps, as a form to optimize the extraction efficiency. The control system as a whole, thus allows determining the pressure times versus pauses, and the total extraction time; it allows using PUFs with different thickness and/or density; it allows to additionally compressing the PUF to leave it as free as possible of the extraction solvent, among others. All this set of automatized actions permit, among other things, to significantly increase the possibility of optimizing the extraction procedure, taking into account parameters such as frequency of compression and decompression, program of extraction, reproducibility, repetitiveness, amount and sequence of solvents and solvents polarities, in a systematic and friendly manner.

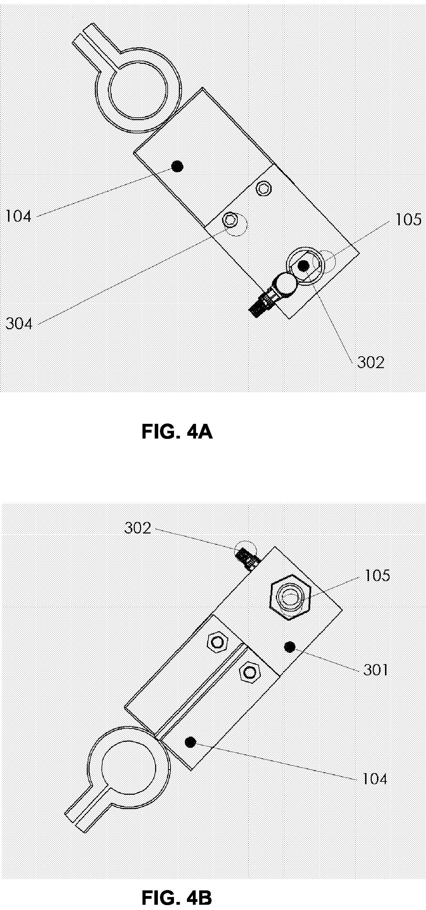

Figure 4A shows an upper view of the metallic support (104) that allows fixing the mechanical-pneumatic piston (105) to the cylindrical support (101) of the extraction system (100). In that figure can be appreciated the two screws (304), which in a preferred manner are of the Allen type, and they fasten the aluminium sheet metal (301) to the metallic support (104) and the regulation screw (302) of the pneumatic piston (105). Figure 4B shows a lower view of the metallic support (104) which allows fixing the mechanical-pneumatic piston (105) to the cylindrical support (101) of the extraction system (100) assembled in this manner.

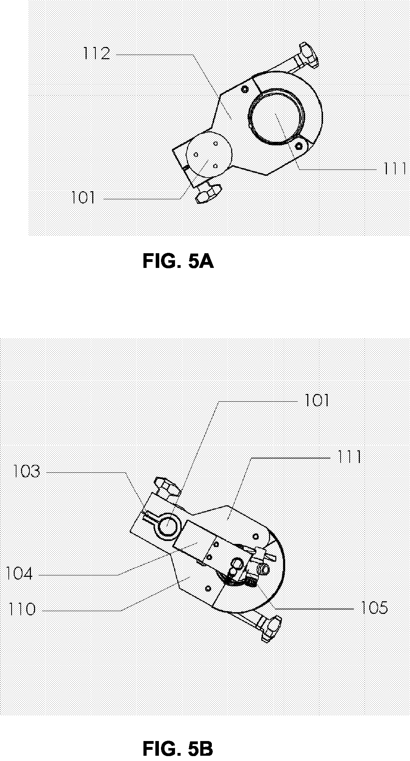

Figure 5A shows a lower view of the plastic circular clamps (110, 112) that hold the glass container for the PUF extraction (111), by its upper and also its lower part, the plastic circular clamps (110, 112) are composed by two parts, the first one clasps the cylinder (101), with its respective winged thread bolt for fastening and security and the second part clasps the glass container for PUF extraction (111). Figure 5B shows an upper view of the plastic circular clamps (110, 112) where in addition it can be seen the metallic covering of the first circular clamp which works for fastening to the cylindrical support (101).

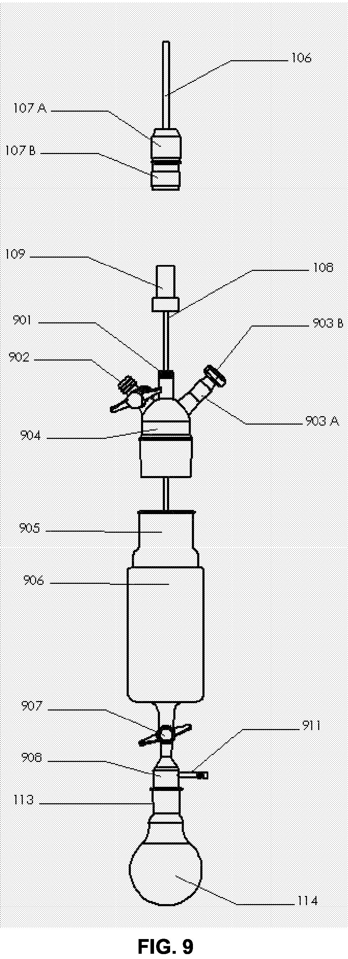

Figures 8 and 9 describe the glass container for the PUF extraction (111) which is built of borosilicate glass and has a mouth (905), which is used to introduce the PUF into the extraction system, this mouth (905) is a ground glass conical female NS64/46, which has an upper part (904) that fits a ground glass conical male NS64/46, that allows the hermetic closure of the extraction container (111) to avoid solvent spills during the extraction. In the same way and to avoid overpressures produced by the solvent evaporated during the process of compression and decompression of the PUF, the upper part (904) is equipped with a Teflon valve 2NS14 (902) that can be open at will during the process, thus preventing this problem. To incorporate new solvent portions or to change the extraction solvent, the same upper part (904) is equipped with a ground glass conical female (903A), NS13/23, which has a ground glass conical male lid (903B), NS14/23, which permits to hermetically close the extraction container (111) anew, once such solvent has been introduced. The glass male mouth with exterior thread (901) allows joining the Teflon piece (109) that works as a guide for the rod of the compression blade (108) so it introduces and moves in the proper vertical form through the interior of the body (906) of the glass container for the PUF extraction (111). Once the PUF has been extracted, the extraction solvent must be removed from the extraction container, for that purpose it is disposed a Teflon valve 2NS14 (907) connected to a ground glass conical male (908), NS28/32, that allows to connect directly to the extraction container, a round bottom distillation flask (114) that has ground glass conical female mouth (113), NS29/32. By this way, when the Teflon valve (907) is opened, the liquid is poured directly to the distillation flask (114), without the need to transfer the liquid to another container, allowing that such distillation flask (114) could be used directly in a rotary evaporatorator (not shown) for the subsequent elimination of the solvent nearly to dryness. The distillation flasks usually used in this process have different volumes (100, 250 or 500 ml), depending on the volume of the final extraction, the only restriction is that all must have a mouth compatible with the measures of the ground glass conical male (908). The glass male (908) also has an open hose connector that allows to even up pressures during the elimination of the extraction solvent from the extraction container (111), making easier the fall of the liquid to the distillation flask (909). Additionally and to achieve a greater extraction of the final extraction solvent, for its analysis as well as for subsequently achieving a greater efficiency in the drying of the PUF, the open hose connector (911) can be connected to an oil-free vacuum pump and apply vacuum for some minutes.

Figure 10 shows a transversal cut through the extraction container (111), where it can be seen how the Teflon fastener fixes by its upper part (107A) the piston (106) rod and by its lower part (107B) the rod of the compression blade (108). It can also be appreciated, the Teflon adapter (109) that works as a guide for the proper and vertical entrance of the Teflon compression blade (108) to the interior of the extraction container (111). This figure shows in addition, the position of the PUF (1001) and the compression blade (108), whose lower part has welded a flat compression surface (1002), with circular form, of 5 cm diameter and it is made of borosilicate glass. This blade (108) has a series of perforations which allow on one hand to compress the PUF (1001) and on the other hand to let the extraction solvent drain every time such PUF (1001) is compressed. In the interior of the body (906) of the glass container for the extraction of the PUF (111), is placed the extraction solvent, which must inundate the PUF completely, in such a way that the polyurethane foam of the PUF (1001) is completely soaked in the solvent of choice. Once the extraction has ended, the blade (108) will keep pressuring the PUF strongly, by means of the regulation of the movement of the piston, as it was described in figure 2, in such a way that it stays in this position during the required time for the maximum elimination of the extraction solvent, leaving the PUF (1001) without solvent residues.

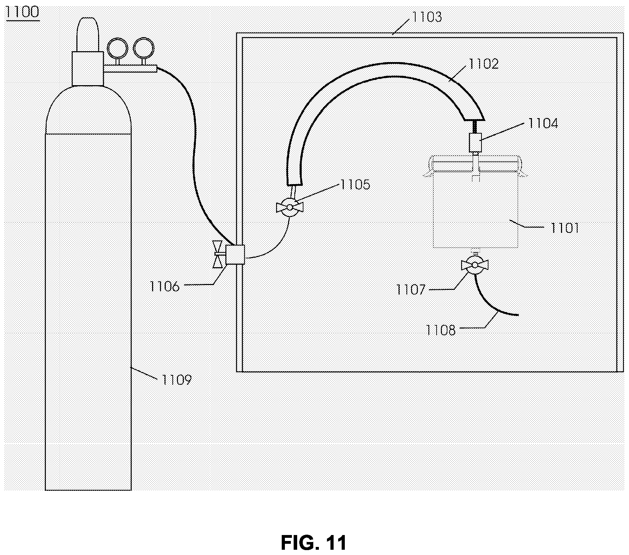

Figure 11 shows the drying system for the PUF in a schematic form. For this purpose the drying container for the PUF (1101) must be connected to a hot nitrogen (N₂) line (1102) whose quality is ultra-pure grade. The gas supply comes from a N₂ cylinder (1109) that has a predetermined pressure, which is reduced by means of a secondary manometer to 4 bars (not shown). The N₂ pipe at 4 bars reaches an extraction hood (1103) and is connected to it by a needle valve for coarse flow regulation (1106), which is at the same time connected to a needle valve for fine flow regulation (1105). The hot nitrogen N₂ line (1102) is at the same time connected and regulated by the valve (1105), the thermal regulation of this line is accomplished thanks to a blanket provided with electric resistances regulated and controlled by a thermostat (not shown), which keeps the temperature of this line at approximately 70°C. The drying of the PUF (1001) is achieved by the process of N₂ sweeping of the residual solvent retained in the PUF, the heating of the N₂ helps to evaporate the solvent which significantly reduces the drying time. The N₂ that has passed through the PUF (1001) is discarded by a regulation valve (1107) through a tube (1108) to the interior of the extraction hood (1103).

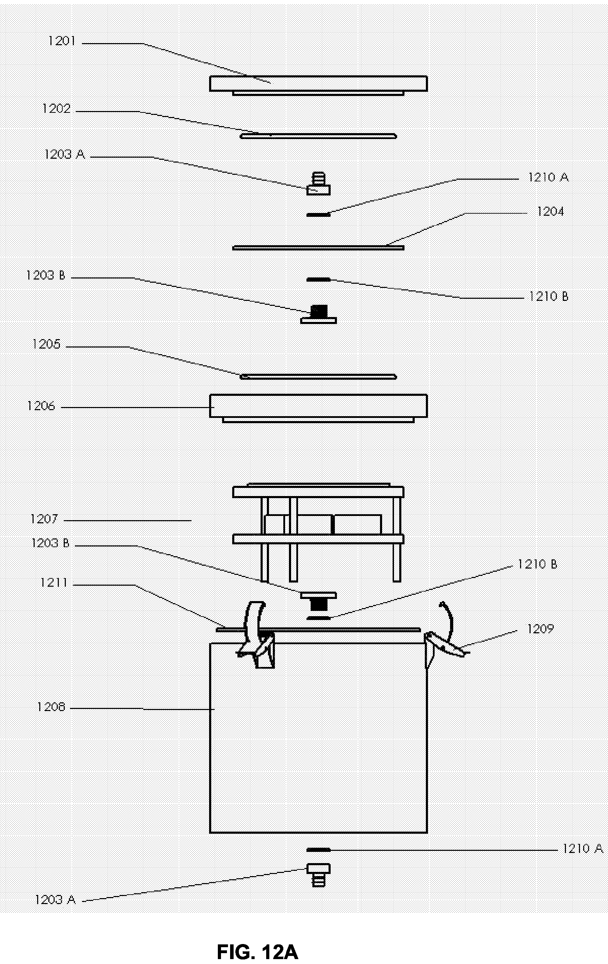

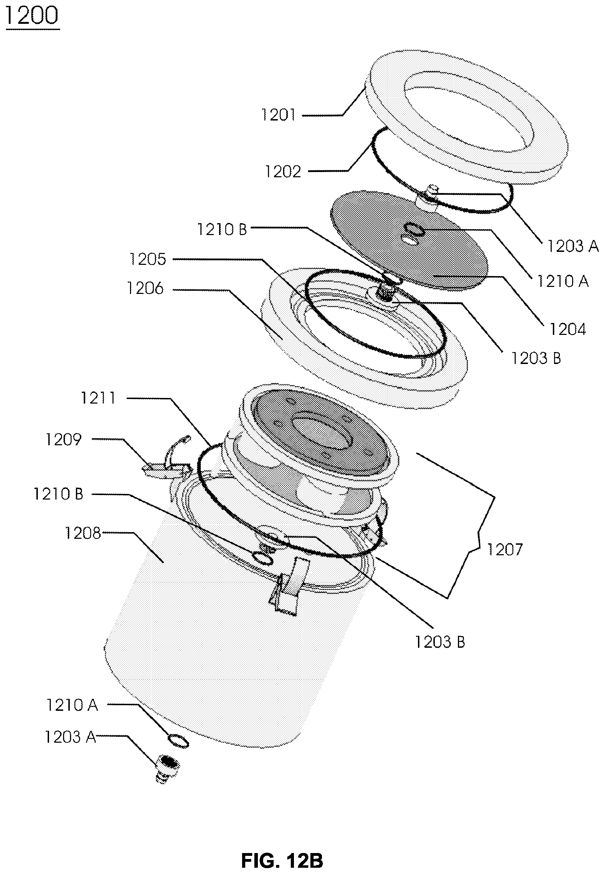

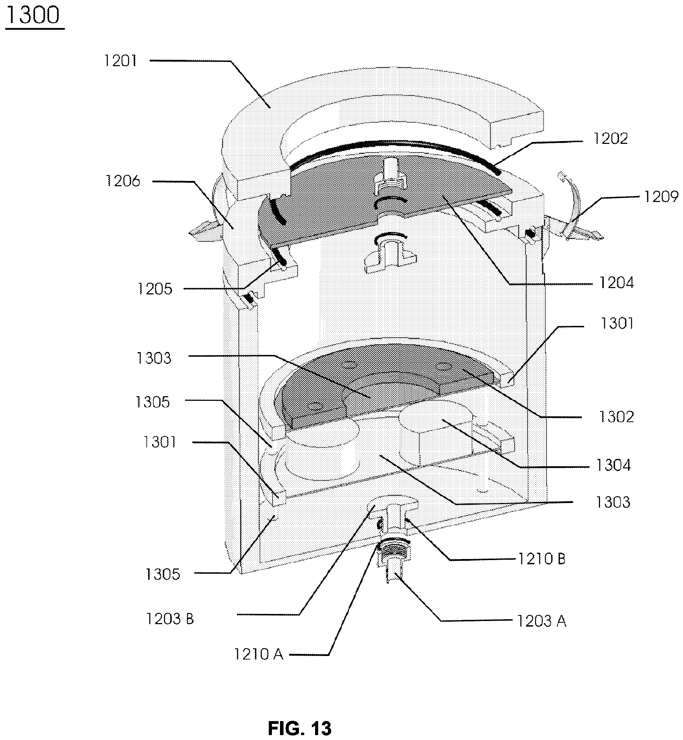

Figure 12A shows the component parts of the drying container for the PUF (1101) in a schematic form. This drying container is composed of a lid, which has an upper part (1201) provided with a wedge for coupling with the lower part (1206) and a groove to accommodate a silicone o-ring (1202). This o-ring (1202) is suitable for hermetically pressuring a transparent 5 mm glass (1204) which stays tight inside the wedge of the lid between its upper part (1201) and lower part (1206) and works as a window to watch the drying process. The lower part (1206) also has a groove to accommodate a silicone o-ring (1205) similar in shape and function to the previous one. The glass window (1204) has in its center a metallic male (1203A) with interior and exterior sweglook thread to connect the hot N₂ line (1102) by a sweglook nut, this line allows the N₂ to enter in the drying container for the PUF (1101). This connection for N₂ entrance is hermetically closed against the glass (1204) by means of a security nut (1203B) which has an exterior thread that allows screwing it to a metallic male (1203A). Both pieces (1023A and 1203B) are moreover sealed against the glass by means of o-rings with appropriate diameters (1210A and 1210B). For the drying procedure, the PUFs are placed in a PUF support (1207) whose description is detailed in figure 13. This support is placed inside the lower part (1208) of the drying container of the PUF (1101), named body of the container. The lid and body of the container are joined by metallic fasteners (1209) which can be adjusted to achieve maximum tightness, as a form to obtain an hermetic closure of the drying container for the PUF (1101). In the lower part of the container (1208) there is a N₂ exit composed of a set of similar pieces to those previously described for the female and male parts 1203A and 1203B, both are once again sealed using identical o-rings of appropriate diameters (1210A and 1210B). In this way, the container (1208) is left hermetic and with the possibility of connecting by its lower part, in the rod of the security nut (1203B), a needle valve (not shown) which allows regulation of the N₂ exit flow to the exterior of the drying container of the PUF (1101).

Figure 13 shows a transversal cut through the component parts of the drying container for the PUF (1101). In this figure it can be appreciated the upper and lower part of the lid of the drying container for the PUF (1101), which has an upper part (1201) provided with a wedge for coupling with the lower part (1206) and a groove to accommodate a silicone o-ring (1202). This o-ring (1202) is suitable for hermetically pressuring a transparent 5 mm glass (1204) which stays tight inside the wedge of the lid between its upper part (1201) and lower part (1206) and works as a window to watch the drying process. The lower part (1206) also has a groove to accommodate a silicone o-ring (1205) similar in shape and function to the previous one. Figure 13 also shows details of the connection system for the drying container (1101) to the hot N₂, which is achieved with the use of a metallic male (1203A) and its respective security nut (1203B), and also with the hermetic adjustment to the glass window (1024) by means of silicone o-rings (1210A and 1210B) placed in the upper and lower part of the N₂ entrances (1203A and 1203B). The PUF support (1207), where the PUF are place for drying, consists of a first support (1301) to accommodate 15 cm diameter PUFs (1302) which is rested on a metallic grid with perforations of 1cm (1302). The support (1301) rests on 2 cm cylindrical legs (1305) to separate it from the second support that has the same dimensions of the previous support (1301), for PUFs with 5 cm diameter (1304). This second support (1301) also rests on 2 cm cylindrical legs (1305) to separate it from the bottom of the drying container for the PUF (1208). The bottom of the container (1208) has a N₂ exit that has exactly the same set of pieces (1203A and 1203B) and o-rings (1210A and 1210B) previously described. In this way, the container (1208) is left hermetic and with the possibility of connecting by its lower part, in the rod of the security nut (1203B), a needle valve (not shown) which allows regulation of the N₂ exit flow to the exterior of the drying container for the PUF (1101).

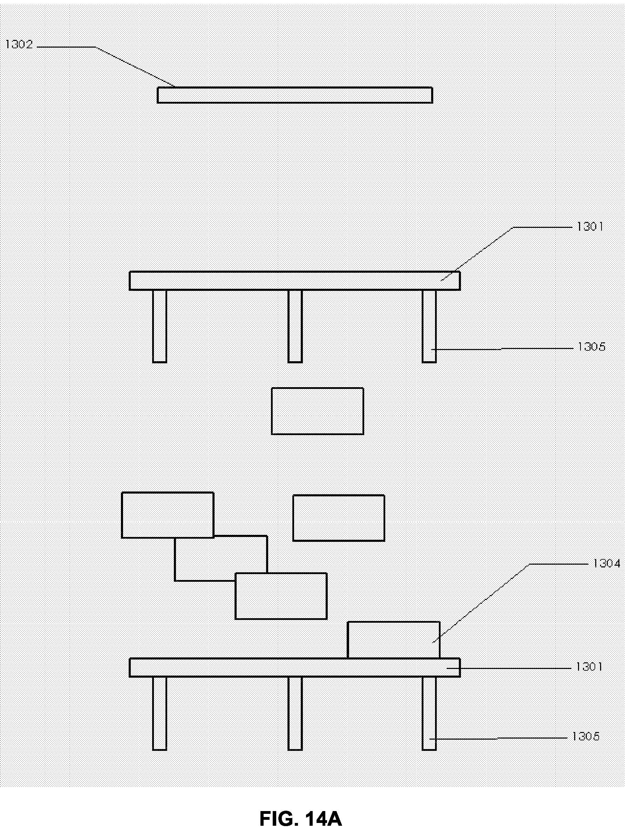

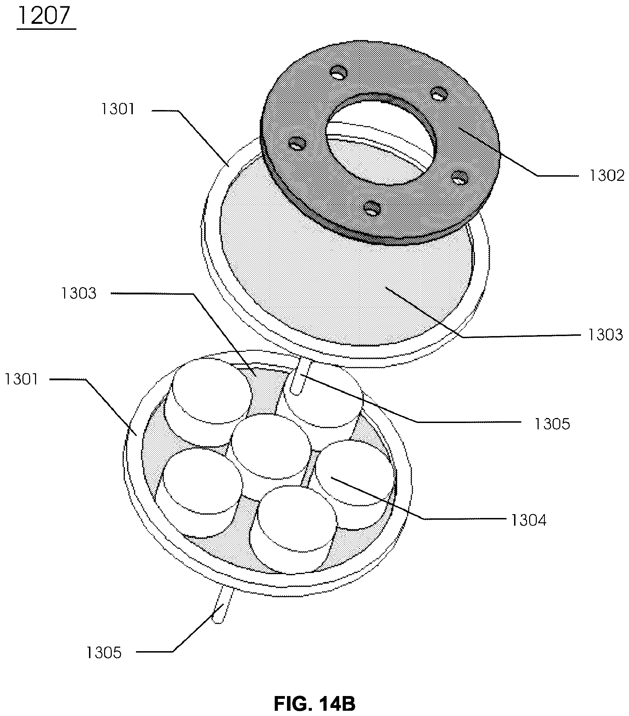

Figures 14A and 14B show the component parts of the PUF support (1207), which is the place where the PUFs are placed for the drying procedure, in the figure it can be appreciated the first support (1301) for 15 cm diameter PUFs (1303) and the second support for 5 cm diameter PUFs (1301). This second support (1301) allows accommodating up to 6 PUFs of 5 cm diameter (1304) each, permitting in this way to optimized the drying procedure, saving time and decreasing the amount of N₂, which results in a lower operational cost. Furthermore, on the second support (1301) can be placed an extra support (1301) with an appropriate diameter to accommodate 15 cm diameter PUF (1302), in this way the same procedure for drying the PUF (1304) can be used for drying the PUF (1302), and further optimize the use of the drying container for the PUF (1101).

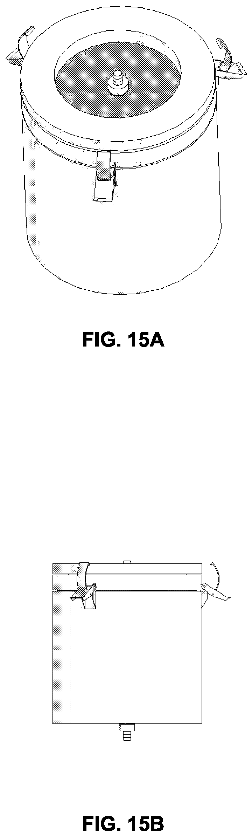

Figures 15A and 15B respectively show the drying container for the PUF (1101) in an isometric view and the same container (1101) closed. In this way it is used to dry the PUFs with 5 cm diameter (1301) and/or as well those with 15 cm diameter (1303).

The analytical procedures associated with this invention derive from the following activities:
**A)** PUF Cleaning: The automatic extraction equipment can be used for extraction of a PUF that is coming from an ambient air sampling or as well for cleaning a PUF that has residual contamination from its fabrication process before using it in a field sampling, as a form to reassure the cleanliness of the PUF at the time of taking an atmospheric sample. The result of this procedure is certified by a chromatographic analysis.
**B)** PUF Drying: Other secondary problem is to dry a PUF that has already been subjected to an extraction with solvents to assure its cleanliness. This apparently obvious procedure requires an automatic drying system for the PUF with the use of hot ultra pure nitrogen. The relevance of this drying procedure resides in the problem that if some minimum remains of solvent are left in the PUF, this stays very active and can be easily contaminated before reaching the sampling place, ruining the sample. In this way, the drying procedure guarantees a clean and dry PUF ready to be used for field sampling, without the problems previously mentioned.
**C)** PUF Storing: Once the PUF has been cleaned and dried, it is necessary to store it in such a form that it is not contaminated before reaching the sampling site.

### PUF Cleaning Procedure:

The PUFs are commercialized with a great number of contaminants that are inherent to their fabrication process. This contamination is so important that the PUF in this condition (dirty) is not suitable to be used as an adsorbent filter in the sampling of atmospheric aerosols, in particular to retain organic chemical compounds in gaseous state present in this type of samples. In this way, before using the PUF for this purpose, it must be decontaminated, put differently it must be cleaned and its cleanliness must be certified by chromatographic techniques that assure no residual substances are left that could prevent a good interpretation of the chromatograms of the real samples once these have been extracted to identify and quantify the analytes of interest. The developed invention precisely consists in an automatic system for PUF (100) extraction, which can be used either for the cleaning procedure as well as the extraction of the PUF. For the cleaning procedure of the PUF, previous to its use under monitoring conditions, it is used a sequence of extraction solvents, for 4 steps of 15 minutes each. Each step is composed of 3 cycles of compression and decompression of the PUF lasting 5 minutes each; starting the cleaning in the first step using 80 ml of water with Mili-Q quality, and then, in the second step using 80 ml of acetone, in the third step using 80 ml of toluene, and finishing the last period with 80 ml of n-hexane.

The extraction procedure starts with the addition of 80 ml of the first solvent that is the most polar one: water (Mili-Q quality) directly in the glass container for PUF extraction (111). After this, the PUF is picked with tweezers and carefully placed in the interior of the same container (111). Then, the upper part (904) of the extraction container (111) is held and introduced through the mouth of the glass male (901) that has attached to it the Teflon piece (109) that works as a guide for the rod of the compression blade (108) so this can be introduced and moved in a proper and vertical form in the interior of the body (906) of the glass container for PUF extraction (111) which fits a ground glass conical male NS64/46, that allows hermetically closing the container.

The extraction adjustment depends on the type of cleaning to be performed, where cycles of compression and decompression of the PUF submerged in the different solvents permit to extract from this solid support (PUF) the impurities previously described. Once the extraction process has ended, the extracted solution is poured in a distillation flask and the solvent is reduced by evaporation in a rotary evaporatorator 30°C of temperature and under vacuum, until a final volume of 1-2 ml. The extract obtained in this step is poured in a 5 ml conical vial in a quantitative form and the excess volume is reduced again, this time under a nitrogen current until nearly dryness. Afterwards, it is dissolved again in 50 µl of solvent and 1 µl of this solution is injected in capillary gas chromatography equipment (GC), using an appropriate chromatography detector, according to the contaminants (FID, ECD, MS) nature, to verify if the cleaning procedure has been carried out successfully. The judgment to determine if this objective has been achieved is resolved by analyzing the size (area under the curve) of the chromatographic peaks obtained from the extract injected in the GC. The area previously mentioned must be inferior to the threshold defined as the maximum allowed accomplishing the PUF cleanliness. This chromatographic analysis permits to certify each PUF by separate and guarantee its use under field conditions in an atmospheric sampling; furthermore it can be used later for the quantification of the analytes of interest adsorbed in the PUF, after the monitoring has been performed.

### PUF Extraction Procedure:

The process involved in this invention is a procedure for extraction of ambient air samples, where organic chemical contaminants present in the MP as a gaseous phase are considered, grouped under the category of semivolatile organic compounds (SVOCs). In the particular case of the equipment developed in this invention, the objective is to extract from a filter named PUF, where the gaseous phase of the air sample is retained, compounds with toxic properties such as Polycyclic Aromatic Hydrocarbons (PAHs) and Polychlorinated Biphenyls (PCBs) and also other families of SVOCs. Once the sampling cartridge has arrived to the laboratory, the PUF is taken out of the PUF compartment with the use of tweezers and carefully placed in the extraction container for the PUF (111), to which previously had been added the first extraction solvents and a internal standard solution to control losses in this procedure and as a manner to be able to calculate the exact concentration of analytes of interest. For this purpose, the PUF is subjected to an extraction with organic solvents of different polarity, where compression and decompression cycles of the PUF submerged in the different solvents allow extracting the analytes of interest from this solid support (PUF), during 4 periods of 15 minutes each. Each step is composed of 3 compression and decompression cycles of the PUF lasting 5 minutes each; initiate the extraction using 80 ml of Toluene in the first three steps, and end the extraction using 80 ml of n-hexane in the last step. After each cycle, the solvent is poured from the extraction container for the PUF (111), by means of opening the Teflon valve joined to a conical ground glass male, which permits to connect a distillation round bottom flask directly to the extraction container, in this way when the Teflon valve is opened, the solvent is poured directly to a distillation flask that has a mouth compatible with the dimensions of the conical ground glass male, this glass male also has an open hose connector, which permits to even up pressures during removal of the extraction solvent from the extraction container, making easier the flow of the liquid to the distillation flask. At the end of the extraction, 320 ml of solvents will be accumulated in the distillation flask containing the analytes extracted from the PUF. The volume of the solvent contained in the distillation flask is reduced by evaporation in a rotary evaporatorator at 30°C of temperature and under vacuum, until reaching a final volume of 1-2 ml. The extract obtained in this step is poured to a conical vial of 5 ml in a quantitative manner and the excess volume is reduced again, this time under nitrogen current until nearly dryness. Subsequently, it is dissolved once more in 100 µl of solvent and subjected to a purification process using packed column chromatography, with the purpose of eliminating unwanted compounds and selecting only those families of compounds of interest. Once the fractions of interest have been obtained, the excess volume is reduced again under nitrogen current until nearly dryness. Afterwards, the extract is dissolved once more with 30-50 µl of solvent according to the concentration level and 1 µl of the extract is injected in the capillary gas chromatography equipment, using an appropriate chromatography detector, according to the nature of the contaminants (FID, ECD, MS) to carry out the identification and quantification of the analytes of interest.

### PUF Storing:

As soon as a clean and dry PUF has been obtained, it is necessary to store it in such a way that it is not contaminated before reaching the sampling location. For this purpose, it is necessary to store the PUF wrapped in aluminium foil previously conditioned. The cleaning treatment for the aluminium foil consists in washing both faces of the material with acetone and drying it in a hood under absolute cleanliness conditions. Once the PUF has been wrapped in clean aluminium foil, it must be stored in a glass container with a hermetic lid. For grater security, the glass container is also wrapped in aluminium foil and stored in darkness. Only in this manner it can be assured a safe, and free of contamination storing of the PUFs before its final use in an atmospheric monitoring.

## Claims

1. A system (100) for automatic extraction of gaseous atmospheric contaminants that are retained in polyurethane foam filters (PUF) which comprises:
- an automatic extraction device configured to extract chemical compounds of interest from the PUF or clean the PUF, the extraction device comprising means for providing compression and decompression cycles of the PUF; and
- a drying device comprising a drying container (1101) for the PUF and a line (1102) configured to supply hot ultra pure nitrogen N₂, so as to sweep and eliminate the solvent to achieve the dryness of the PUF.

2. An automatic extraction system according to claim 1, wherein the means for providing compression and decompression cycles of the PUF comprises:
- a mechanical-pneumatic piston (105); and
- a control unit (003) for solenoid valves, which is configured to control movement of the piston (105);
wherein, the automatic extraction device further comprises:
- a metallic support (104) for holding the piston (105); and
- a glass container (111) for PUF extraction fastened to the metallic support (104).

3. An automatic extraction system according to claim 2, wherein the means for providing compression and decompression cycles of the PUF further comprises:
- an oil-free pressure pump with Teflon membrane (005) configured to accomplish the movement of the mechanic-pneumatic piston (105) by compression of ambient air, the oil-free pressure pump with Teflon membrane (005) being configured to send the compressed air through tubes (001, 002) to a rapid connection of an entrance valve (302) in the piston (105);
- an oil deposit (004) configured to supply lubricant to form an oil layer on a piston rod (106) and to allow the formation of an air aerosol containing very small oil particles in suspension and to avoid any possible contamination from the oil of the system;
- a Teflon fastener (107) located at an inferior end of the piston rod (106), which has a sealed conicity in its superior piece such that the conicity inevitably traps any possible drop that might fall from the oil layer from the piston rod (106) and avoids contamination of the inferior end of the Teflon fastener (107); wherein the Teflon fastener (107) is formed in two independent parts (107A, 107B) such that contamination is avoided thereby preventing the accidental contamination of a rod of a glass compression blade (108) that is configured to work over the PUFs;
- an oil trap (007) at the end of a tube (006) that connects a rapid connection of an exit valve (303) of the compressed air of the piston (105) with the oil trap (007); the trap (007) being washable and its takedown being connected to an exit tube (008) so as to definitively eliminate the residual compressed air from the system to the exterior;
wherein the pneumatic piston (105) has a regulation screw (305, 306) at an entrance and at the exit of the compressed air, the screws (305, 306) are configured to mechanically regulate the movement of the piston rod (106) so as to fit the glass container (111) for PUF extraction to different types of PUF of different sizes and densities, different extraction solvent volumes, and different extraction procedures thereby controlling the magnitude of pressure applied to the PUF during compression and expansion and improving the efficiency of extraction; wherein the mechanical-pneumatic piston (105) uses compressed air from an exit tube (001) configured to transport the pressurized air to the piston (105) entering through the entrance valve (302), a return air exits through the exit valve (303) and is leaded by a tube (002) to the entrance of the control unit (003); wherein the oil deposit (004) is configured to mix the air, compressed by the oil-free pressure pump with Teflon membrane (005) with oil so as to lubricate the piston (105) by transporting the air thus prepared to a solenoid valve connected to the exit tube (001) directed to the piston (105), the residual air that is discarded once has passed through the piston (105), and exits the control unit (003) through an outlet tube (006) and reaches the oil trap (007) to finally being discarded to the exterior of the laboratory through the exit tube (008).

4. An automatic extraction system according to claim 3, wherein the control unit (003) is configured to control a plurality of solenoid valves so as to permit performing the movement of the piston by means of a PLC that has a LCD screen and is configured to allow programming of different PUF extraction procedures by means of increasing the compression, based in a higher or lower pressure of the piston controlling the amount of air that is compressed, wherein the control unit (003) further has a series of electronic elements such as differentials, acoustic and luminous alarms that indicate the ending of an operation sequence configured to permit determining the time intervals for pressure versus pauses, and the total extraction time; wherein the control unit (003) is further configured to allow using PUFs with different thickness and/or densities; and to additionally compress the PUF to leave it as free as possible of extraction solvents, among others.

5. An automatic extraction system according to claim 2, wherein the metallic support (104) consists of a cylindrical duraluminium support (101) screwed to an iron base (115) inserted in a plastic platform and configured for attachment of the mechanical-pneumatic piston (105); wherein the cylindrical support (101) has a fastener screw (102) in its upper part configured to allow regulating the height at which the support (101) is placed; the mechanical-pneumatic piston (105) is screwed and secured to the cylindrical support (101) on the metallic support (104) with regulation screws (305, 306) configured to control the movement of the piston rod (106); plastic circular clamps (110, 112) are provided to support the glass container (111) for PUF extraction, from its upper and lower part as well; the plastic circular clamps (110, 112) have two parts, one that surrounds the cylindrical support (101) with a winged thread bolt for fastening and security and a second part that surrounds the glass container (111) for PUF extraction.

6. An automatic extraction system according to claim 2, wherein the glass container (111) for PUF extraction is built of borosilicate glass and has a mouth (905) configured to permit the insertion of the PUF in the extraction system; the mouth (905) is a ground glass conical female which fits an upper part (904) consisting in a ground glass conical male configured to allow the hermetic closure of the extraction container so as to avoid solvent spills during the extraction and also to avoid overpressures produced by the evaporated solvent during the process of compression and expansion of the PUF, the upper part (904) is provided with a Teflon valve (902) configured to be opened at will during the process so as to introduce new portions of solvent or to change the extraction solvent, the upper part (904) is provided with a ground conical female (903A) which has a ground conical male glass lid (903B) configured to allow the hermetic closure of the extraction container (111); a glass male mouth with exterior thread (901) configured to permit joining a Teflon adapter (109) configured as a guide for a rod of a compression blade (108) such that it can be inserted and moved in the right and vertical form inside the glass container (111) for PUF extraction; a Teflon valve (907) joined to a ground glass conical male (908) so as to remove extraction solvent from the extraction container (111) is configured to allow connecting a distillation round bottom flask (114) directly to the extraction container (111) such that when the Teflon valve (907) is opened, the liquid is poured directly into the distillation flask (114) that has a mouth compatible with the ground conical glass male (908), wherein the glass male (908) has an open hose connector configured to permit evening up the pressures during the extraction solvent elimination from the extraction container (111) thereby facilitating the flow of liquid to the distillation flask (114).

7. An automatic extraction system according to claim 1, wherein the drying device for the PUF comprises a lid that has an upper part (1201) with a wedge for coupling with a lower part (1206) and it has a groove to accommodate a silicone o-ring (1202); wherein the o-ring (1202) is configured to hold tight and hermetic a transparent glass (1204) that is adjusted in the wedge between the upper (1201) and lower (1206) part of the lid and is configured as a window to observe the drying process; the lower part (1206) also has a groove to accommodate a further silicone o-ring (1205) similar to the previous one in form and function; the transparent glass (1204) has on its center a metallic male (1203A) with an interior and exterior sweglook thread for connection to the hot N₂ line (1102) by a sweglook nut so as to allow the entrance of the N₂ to the drying container (1101) for the PUF; is a lock nut (1203B) is further provided for hermetically sealing the N₂ entrance connection against the glass (1204), the lock nut (1203B) having an exterior thread configured for screwing it to the metallic male (1203A), both pieces (1203B, 1203A) are sealed against the glass (1204) with o-rings (1210A, 1210B) with appropriate diameter; a PUF support (1207) is located inside a lower part (1208) of the drying container (1101) for the PUF, or body of the container; metallic fasteners are provided for coupling the lid and the body of the container, wherein the fasteners are adjustable to achieve maximum tightness, thereby hermetically sealing of the drying container (1101) for the PUF.

8. An automatic extraction system according to claim 1, wherein the line (1102) of hot ultra-pure nitrogen (N₂) supply consists of a N₂ cylinder (1109) with a predetermined pressure, which is configured to be reduced using a secondary manometer at 400 kPa (4 bars), a pipe configured such that N₂ at 400 kPa (4 bars) reaches an extraction hood (1103) and is connected to it with a needle valve for coarse flow regulation (1106) which is at the same time connected to a needle valve for fine flow regulation (1105); wherein the hot nitrogen N₂ line supply (1102) is at the same time connected and regulated by the valve for fine flow regulation (1105), wherein a blanket provided with electric resistances which are regulated and controlled by a thermostat is provided for thermal regulation of the N₂ line (1102) so as to keep the temperature of this line (1102) at approximately 70 °C; thereby accomplishing the PUF drying by removal of residual solvent retained in the PUF.

9. An automatic extraction system according to claim 7, wherein the PUF support (1207) consists of a first support (1301) for the PUF of a first diameter which rests on a metallic grid with perforations (1302) of 1 cm; the first support (1301) is supported by cylindrical legs (1305) that separate it from a second support which has the same dimensions of the first support (1301) such that it can be used for the PUFs with a second diameter that is smaller than the first diameter; the second support also resting on cylindrical legs to separate it from the lower part (1208) of the drying container (1101) of the PUF so as to allow the free circulation of N₂.

10. Method of automatic extraction of gaseous atmospheric contaminants , which are retained in polyurethane foam filters (PUF), wherein the method is comprising of the following steps:
- extract the chemical compounds of interest from the PUF or clean the PUF, using a sequence of organic solvents where the PUF must be immersed, by means of an extraction or cleaning process based in compression and decompression cycles of the PUF;
- dry the PUFs by means of solvent sweeping with hot gaseous ultra-pure N₂, eliminating the solvent until the PUF is dry; and
- chromatographically certify the cleanliness of the PUF.

11. Method of automatic extraction according to claim 10, wherein the step of extracting the chemical compounds of interest uses a sequence of organic solvents where the PUF must be immersed, by means of a extraction process based in compression and decompression cycles of the PUF; it is achieved by means of a mechanical-pneumatic piston; a control unit for solenoid valves, which allow controlling the movement of the piston; a metallic support; a glass container for PUF extraction fastened to such support.

12. Method of automatic extraction according to claim 10, wherein the step of drying the cleaned PUF by means of sweeping the solvent with gaseous hot ultra pure N₂, eliminating the solvent until reaching dryness of the PUF; it is performed in a drying container for the PUF made of stainless steel; and a line of hot ultra pure nitrogen (N₂) supply.

13. Method of automatic extraction according to any of claims 10 - 12, wherein it further includes the step of storing the cleaned and dried PUF to avoid its contamination before reaching the sampling location, by wrapping in aluminium foil previously cleaned with acetone on both faces and left to dry under a hood subjected to absolute cleanliness conditions and stored in a glass container with a hermetic lid; the glass container is also wrapped in aluminium foil and stored in darkness.

14. Method of automatic extraction according to claim 10, wherein the sequence of extraction solvents to extract the chemical compounds of interest from the PUF, are organic solvents with different polarities, and the extraction is performed during 4 steps of 15 minutes each, wherein each period is composed of 3 cycles of compression and decompression of the PUF lasting 5 minutes each; initiating the extraction with 80 ml of toluene during the first three steps, and finishing the extraction using 80 ml of n-hexane during the last step.

15. Method of automatic extraction according to claim 10, wherein the sequence of organic solvents used for cleaning the PUF is initiated using a sequence of extraction solvents, during 4 steps lasting 15 minutes each, wherein each step is composed by 3 cycles of compression and decompression of the PUF lasting 5 minutes each; starting the cleaning in the first period using 80 ml of water with Mili-Q quality, and then, in the second step using 80 ml of acetone, in the third step using 80 ml of toluene, and finishing the last step using 80 ml of n-hexane.

## Patentansprüche

1. Ein System (100) zur automatischen Extraktion von gasförmigen atmosphärischen Schadstoffen, die in Polyurethan-Schaum-Filtern (PUF) festgehalten werden, welches folgendes umfasst:
- eine Vorrichtung zur automatischen Extraktion, die konfiguriert ist, um chemische Verbindungen von Interesse aus den PUF zu extrahieren oder die PUF zu reinigen, wobei die Extraktionsvorrichtung ein Mittel umfasst, um Zyklen von Kompression und Dekompression der PUF durchzuführen; und
- eine Trocknungsvorrichtung umfassend einen Trocknungsbehälter (1101) für die PUF und eine Leitung (1102), die konfiguriert ist, um heißen ultrareinen Stickstoff N₂ zu speisen, um das Lösungsmittel zu spülen und zu entfernen, um die Trockenheit der PUF zu erreichen.

2. Ein System zur automatischen Extraktion nach Anspruch 1, wobei das Mittel zur Durchführung der Zyklen von Kompression und Dekompression des PUF folgendes umfasst:
- einen mechanisch-pneumatischen Kolben (105); und
- eine Steuereinheit (003) für Magnetventile, welche konfiguriert ist, um die Bewegung des Kolbens zu steuern (105);
wobei, die Vorrichtung zur automatischen Extraktion weiterhin folgendes umfasst:
- einen metallischen Träger (104) zur Halterung des Kolbens (105); und
- einen Glasbehälter (111) für die PUF-Extraktion, der am metallischen Träger (104) befestigt ist.

3. Ein System zur automatischen Extraktion nach Anspruch 2, wobei das Mittel zur Durchführung der Zyklen von Kompression und Dekompression des PUF weiterhin folgendes umfasst:
- eine ölfreie Druckpumpe mit einer Membran aus Teflon (005), die konfiguriert ist, um die Bewegung des mechanisch-pneumatischen Kolbens (105) durch Kompression von Umgebungsluft zu erreichen, wobei die ölfreie Druckpumpe mit Teflon-Membran (005) konfiguriert ist, um die komprimierte Luft durch Röhre (001, 002) an eine schnelle Verbindung eines Einlassventils (302) im Kolben (105) zu leiten;
- einen Ölbehälter (004), der konfiguriert ist, um Schmiermittel zu speisen, um eine Ölschicht auf einer Kolbenstange (106) zu bilden und um die Bildung von einem Luftaerosol zu ermöglichen, das sehr kleine Ölpartikeln in Suspension enthält und um jede mögliche Verunreinigung aus dem Öl des Systems zu vermeiden;
- eine Halterung (107) aus Teflon, die an einem unteren Ende der Kolbenstange (106) angeordnet ist, welche eine versiegelte Konizität in deren oberen Teil hat, so dass die Konizität zwangsläufig jeden möglichen Tropf einfängt, der aus der Ölschicht von der Kolbenstange (106) fallen könnte und eine Verunreinigung des unteren Endes der Teflon-Halterung (107) vermeidet; wobei die Teflon-Halterung (107) aus zwei unabhängigen Teilen (107A, 107B) besteht, so dass eine Verunreinigung vermieden wird, wodurch die unbeabsichtigte Verunreinigung einer Stange von einem Glasdruckblatt (108), das konfiguriert ist, um oberhalb der PUF zu funktionieren, vorhindert wird;
- einen Ölabscheider (007) am Ende eines Rohres (006), das eine schnelle Verbindung eines Auslassventils (303) der komprimierten Luft des Kolbens (105) mit dem Ölabscheider (007) verbindet; wobei der Abscheider (007) waschbar ist und dessen Abzug mit einem Auslassrohr (008) angeschlossen ist, um die restliche komprimierte Luft aus dem System endgültig nach außen zu entfernen;
wobei der pneumatische Kolben (105) eine Regulierschraube (305, 306) an einem Einlass und am Auslass der komprimierten Luft hat, die Schrauben (305, 306) konfiguriert sind, um die Bewegung der Kolbenstange (106) mechanisch zu regulieren, um den Glasbehälter (111) für die PUF-Extraktion an verschiedene PUF-Typen verschiedener Größen und Dichten, verschiedener Volumen von Extraktionslösungsmittel und verschiedener Extraktionsverfahren anzupassen, wodurch das Ausmaß des auf die PUF während der Kompression und der Expansion ausgeübten Drucks kontrolliert und die Effizienz der Extraktion verbessert wird; wobei der mechanisch-pneumatische Kolben (105) komprimierte Luft aus einem Auslassrohr (001) nutzt, das konfiguriert ist, um die Druckluft eingehend durch das Einlassventil (302) zum Kolben (105) abzutransportieren, Rückluft durch das Auslassventil (303) hinausgeht und durch ein Rohr (002) zum Einlass der Steuereinheit (003) geleitet wird; wobei der Ölbehälter (004) konfiguriert ist, um die Luft, die komprimiert durch die ölfreie Druckpumpe mit Teflon-Membran (005) worden ist, mit Öl zu mischen, um den Kolben (105) zu schmieren, indem die so erzeugte Luft zu einem mit dem zum Kolben (105) gerichteten Ausgansrohr (001) verbundenen Magnetventil abtransportiert wird, wobei die restliche Luft, die nach ihrem Durchfluss durch den Kolben ausgesondert wird die Steuereinheit (003) durch ein Auslassrohr (006) verlässt und den Ölabscheider (007) erreicht, um schließlich aus dem Labor durch das Auslassrohr (008) nach außen ausgesondert zu werden.

4. Ein automatisches Extraktionssystem nach Anspruch 3, wobei die Steuereinheit (003) konfiguriert ist, um eine Vielzahl von Magnetventilen zu steuern, um die Durchführung der Bewegung des Kolbens mittels einer SPS zu ermöglichen, welche einen LCD-Monitor hat und konfiguriert ist, um das Programmieren von verschiedenen PUF-Extraktionsverfahren durch die Verstärkung der Kompression zu ermöglichen, beruhend auf einem höheren oder niedrigeren Druck des Kolbens, der die Menge der komprimierten Luft regelt, wobei die Steuereinheit (003) weiterhin eine Reihe von elektronischen Elementen hat, wie etwa Differenziale, akustische und leuchtende Alarme, welche auf das Ende einer Betriebssequenz hinwiesen, die konfiguriert sind, um die Feststellung der Zeitspannen in Bezug auf Druck gegenüber den Pausen und die gesamte Extraktionszeit zu ermöglichen; wobei die Steuereinheit (003) weiterhin konfiguriert ist, um die Verwendung von PUF verschiedener Dicke und/oder Dichten zu ermöglichen; und um zusätzlich den PUF zu komprimieren, so dass er so frei wie möglich von Extraktionslösungsmitteln, unter anderen, bleibt.

5. Ein automatisches Extraktionssystem nach Anspruch 2, wobei der metallische Träger (104) aus einem zylindrischen Träger aus Duraluminium (101) besteht, der an einem in einer Kunstoffplattform eingebauten Fuß aus Eisen (115) angeschraubt ist und der konfiguriert zum Anschluss des mechanisch-pneumatischen Kolbens (105) ist; wobei der zylindrische Träger (101) eine Befestigungsschraube (102) in seinem oberen Teil hat, die konfiguriert ist, um die Höhe einzustellen, auf der der Träger (101) angeordnet ist; wobei der mechanisch-pneumatische Kolben (105) angeschraubt und befestigt an dem zylindrischen Träger (101) auf dem metallischen Träger (104) mit Regulierschrauben (305, 306) ist, die konfiguriert sind, um die Bewegung der Kolbenstange (106) zu steuern; wobei runde Kunstoffklemmstücke (110, 112) zur Halterung des Glasbehälters (111) von seinem oberen sowie seinem unteren Teil zur PUF-Extraktion bereitgestellt sind; wobei die runden Kunstoffklemmstücke (110, 112) zwei Teile haben, einer, der den zylindrischen Träger (101) mit einem geflügelten Gewindebolzen zur Befestigung und Sicherung umgibt und ein zweiter Teil, der den Glasbehälter (111) zur PUF-Extraktion umgibt.

6. Ein automatisches Extraktionssystem nach Anspruch 2, wobei der Glasbehälter (111) zur PUF-Extraktion aus Borosilikatglas ist und eine Öffnung (905) hat, die konfiguriert ist, um die Einführung des PUF in das Extraktionssystem zu ermöglichen; wobei die Öffnung (905) ein konischer Buchsenteil aus satiniertem Glas ist, welcher an einen oberen Teil (904) bestehend in einem konischen Steckteil aus satiniertem Glas angepasst ist, der konfiguriert ist, um den hermetischen Verschluss des Extraktionsbehälters zu ermöglichen, um Lecks von Lösungsmittel während der Extraktion zu vermeiden sowie einen durch das verdampfte Lösungsmittel während der Kompression und der Expansion des PUF verursachten Überdruck zu verhindern, wobei der obere Teil (904) mit einem Teflonventil (902) ausgestattet ist, das konfiguriert ist, um während des Verfahrens nach Belieben geöffnet zu werden, um neue Anteile von Lösungsmittel zu zuführen oder um das Extraktionslösungsmittel zu wechseln, wobei der obere Teil (904) mit einem konischen Buchsenteil aus satiniertem Glas (903A) ausgestattet ist, der einen konischen Steckdeckel aus satiniertem Glas (903B) hat, der konfiguriert ist, um den hermetischen Verschluss des Extraktionsbehälters (111) zu ermöglichen; eine bolzenartige Öffnung aus Glas mit Außengewinde (901) konfiguriert ist, um an einen Teflon-Adapter (109) angeschlossen zu werden, der konfiguriert als Führung für eine Stange eines Druckblatts (108) ist, so dass diese in den Glasbehälter (111) zur PUF-Extraktion in der richtigen und vertikalen Form eingeführt und darin bewogen werden kann; ein TeflonVentil (907), das an einem konischen Steckteil aus satiniertem Glas (908) angeschlossen ist, um Extraktionslösungsmittel aus dem Extraktionsbehälter (111) zu entfernen, konfiguriert ist, um das Verbinden von einem Destillierrundkolben (114) direkt mit dem Extraktionsbehälter (111) zu ermöglichen, so dass, wenn das Teflonventil (907) geöffnet wird, die Flüssigkeit direkt in den Destillierkolben (114) gegossen wird, der eine Öffnung hat, die zum konischen Steckteil aus satiniertem Glas (908) passt, wobei der Glassteckteil (908) einen offenen Schlauchanschluss hat, der konfiguriert ist, um die Ausgleichung der Druckwerte während der Entfernung von Extraktionslösungsmittel aus dem Extraktionsbehälter (111) zu ermöglichen, wodurch das Fließen von Flüssigkeit zum Destillierkolben (114) ermöglicht wird.

7. Ein automatisches Extraktionssystem nach Anspruch 1, wobei die Trocknungsvorrichtung für den PUF einen Deckel umfasst, der einen oberen Teil (1201) mit einem Keil zur Verbindung mit einem unteren Teil (1206) hat und einen Schlitz hat, um einen O-Ring (1202) aus Silikon aufzunehmen; wobei der O-Ring (1202) konfiguriert ist, um ein durchsichtiges Glas (1204) dicht und hermetisch zu halten, das im Keil zwischen dem oberen (1201) und unterem (1206) Teil des Deckels eingepasst ist und als Fenster konfiguriert ist, um das Trocknungsverfahren zu überwachen; wobei der untere Teil (1206) auch einen Schlitz hat, um einen weiteren O-Ring (1205) aus Silikon ähnlich wie der vorherige Ring in Form und Funktion aufzunehmen; wobei das durchsichtige Glas (1204) auf seinem Mittel einen metallischen Steckteil (1203A) mit einer inneren und äußeren Sweglook-Gewinde zum Anschluss an die Leitung von heißem N₂ (1102) mittels einer Sweglook-Mutter hat, um das Einfließen vom N₂ in den Trocknungsbehälter (1101) für den PUF zu ermöglichen; ein Kontermutter (1203B) weiterhin zur hermetischen Versiegelung des Anschlusses für das Einfließen von N₂ gegen das Glas (1204) bereitgestellt ist, wobei die Kontermutter (1203) eine äußere Gewinde hat, die konfiguriert ist, um an den metallischen Steckteil (1203A) angeschraubt zu werden, wobei beide Teile (1203B, 1203A) am Glas (1204) mittels O-Ringe (1210A, 1210B) eines geeigneten Durchmessers abgedichtet sind; ein PUF-Träger (1207) innerhalb eines unteren Teils (1208) des Trocknungsbehälters (1101) für die PUF, oder Behälterkörper, angeordnet ist; metallische Befestigungsmittel zur Kopplung des Deckels und des Behälterkörpers bereitgestellt sind, wobei die Befestigungsmittel eingestellt werden können, um die maximale Dichtheit zu erreichen, wodurch der Trocknungsbehälter (1101) für die PUF hermetisch versiegelt wird.

8. Ein automatisches Extraktionssystem nach Anspruch 1, wobei die Leitung (1102) zur Speisung von heißem ultrareinem Stickstoff (N₂) aus folgendem besteht: einem N₂-Zylinder (1109) mit einem vorherbestimmten Druck, welcher konfiguriert ist, um unter Verwendung von einem sekundären Manometer auf 400 kPa (4 bar) gesenkt zu werden, einem Rohr, das derart konfiguriert ist, dass N₂ bei 400 kPa (4 bar) eine Absaughaube (1103) erreicht und damit mittels eines Nadelventils zur groben Durchflussregulierung (1106) verbunden ist, welches gleichzeitig mit einem Nadelventil zur feinen Durchflussregulierung (1105) verbunden ist; wobei die Leitung zur Speisung von heißem Stickstoff N₂ (1102) gleichzeitig mit dem Ventil zur feinen Durchflussregulierung (1105) verbunden und von diesem reguliert wird, wobei eine Außendichtung mit elektrischen Widerständen, die durch einen Thermostat reguliert und gesteuert werden, zur thermischen Regulierung der N₂-Leitung (1102) bereitgestellt ist, um die Temperatur dieser Leitung (1102) bei ca. 70 °C zu halten; wodurch die PUF-Trocknung durch die Entfernung von im PUF festgehaltenem restlichem Lösungsmittel durchgeführt wird.

9. Ein automatisches Extraktionssystem nach Anspruch 7, wobei der PUF-Träger (1207) aus einem ersten Träger (1301) für den PUF von einem ersten Durchmesser besteht, welcher auf einem Drahtgeflecht mit Bohrungen (1302) von 1 cm liegt; wobei der erste Träger (1301) durch zylindrische Füße (1305) getragen wird, die ihn von einem zweiten Träger trennen, welcher die gleiche Abmessungen wie der erste Träger (1301) hat, so dass er für die PUF aufweisend einen zweiten Durchmesser, der geringer als der erste Durchmesser ist, benutzt werden kann; der zweite Träger auch auf zylindrischen Füßen liegt, um ihn vom unteren Teil (1208) des Trocknungsbehälters (1101) der PUF zu trennen, um einen freien Durchfluss von N₂ zu ermöglichen.

10. Verfahren zur automatischen Extraktion von gasförmigen atmosphärischen Schadstoffen, welche in Polyurethan-Schaum-Filtern (PUF) festgehalten werden, wobei das Verfahren aus den folgenden Schritten besteht:
- extrahieren der chemischen Verbindungen von Interesse aus dem PUF oder reinigen des PUF unter Verwendung von einer Reihenfolge von organischen Lösungsmitteln, wo der PUF untergetaucht werden muss, mittels eines Extraktions- oder Reinigungsverfahrens basierend auf Zyklen von Kompression und Dekompression des PUF;
- trocknen der PUF durch Lösungsmittelspülung mit heißem gasförmigem ultrareinem N₂ und entfernen des Lösungsmittels bis der PUF trocken ist; und
- bestätigen mittels Chromatographie, dass der PUF sauber ist.

11. Verfahren zur automatischen Extraktion nach Anspruch 10, wobei im Schritt, in dem die chemischen Verbindungen von Interesse extrahiert werden, eine Reihenfolge von organischen Lösungsmitteln verwendet werden, wo der PUF untergetaucht werden muss, mittels eines Extraktionsverfahrens basierend auf Zyklen von Kompression und Dekompression des PUF; es wird durchgeführt mittels eines mechanisch-pneumatischen Kolbens; einer Steuereinheit für Magnetventile, welche die Steuerung der Bewegung des Kolbens ermöglichen; eines metallischen Trägers; eines Glasbehälters zur PUF-Extraktion, der an dem Träger befestigt ist.

12. Verfahren zur automatischen Extraktion nach Anspruch 10, wobei der Schritt, in dem der gereinigte PUF mittels Spülung des Lösungsmittels mit gasförmigem heißem ultrareinem N₂ getrocknet wird, das Lösungsmittel bis zur Trocknung des PUF entfernt wird, in einem Trocknungsbehälter für den PUF, der aus rostfreiem Stahl besteht, und einer Leitung zur Speisung von heißem ultrareinem Stickstoff (N₂) durchgeführt wird.

13. Verfahren zur automatischen Extraktion nach einem der Ansprüche 10 - 12, welches weiterhin den Schritt umfasst, in dem der gereinigte und getrocknete PUF aufbewahrt wird, um zu vermeiden, dass er verunreinigt wird, bevor der Probenahmeort erreicht wird, indem er in vorher mit Aceton beidseitig gereinigter Aluminiumfolie eingehüllt wird und unter einer Haube unter Bedingungen absoluter Sauberkeit getrocknet wird und in einem Glasbehälter mit einem hermetischen Deckel aufbewahrt wird; wobei der Glasbehälter auch in Aluminiumfolie eingehüllt und im Dunkeln aufbewahrt wird.

14. Verfahren zur automatischen Extraktion nach Anspruch 10, wobei die Sequenz von Extraktionslösungsmitteln zur Extraktion der chemischen Verbindungen von Interesse aus dem PUF organische Lösungsmittel mit verschieden Polaritäten sind und die Extraktion in 4 Schritten von jeweils 15 Minuten durchgeführt wird, wobei jede Zeitspanne aus 3 Zyklen von Kompression und Dekompression des PUF von jeweils 5 Minuten besteht; wobei die Extraktion mit 80 ml Toluol während der ersten drei Schritten angefangen wird und die Extraktion mit 80 ml von n-Hexan während des letzten Schritts beendet wird.

15. Verfahren zur automatischen Extraktion nach Anspruch 10, wobei die Sequenz der zur Reinigung des PUF verwendeten organischen Lösungsmittel mit einer Sequenz von Extraktionslösungsmitteln während 4 Schritte von jeweils 15 Minuten angefangen wird, wobei jeder Schritt aus 3 Zyklen von Kompression und Dekompression des PUF von jeweils 5 Minuten besteht; wobei die Reinigung in der ersten Zeitspanne mit 80 ml Wasser von Milli-Q-Qualität angefangen wird, woraufhin im zweiten Schritt 80 ml Aceton benutzt werden, im dritten Schritt 80 ml Toluol benutzt werden und der letzte Schritt mit 80 ml n-Hexan beendet wir.

## Revendications

1. Un système (100) d'extraction automatique de contaminants atmosphériques gazeux qui sont retenus dans des filtres en mousse de polyuréthane (PUF) qui comprend :
- un dispositif d'extraction automatique configuré pour extraire des composés chimiques d'intérêt des PUF ou nettoyer les PUF, le dispositif d'extraction comprenant un moyen pour fournir des cycles de compression et décompression des PUF ; et
- un dispositif de séchage comprenant un récipient de nettoyage (1101) pour les PUF et une ligne (1102) configurée pour fournir de l'azote N₂ ultra pur chaud, pour balayer et enlever le solvant afin d'atteindre la siccité des PUF.

2. Un système d'extraction automatique selon la revendication 1, dans lequel le moyen pour fournir des cycles de compression et décompression des PUF comprend :
- un piston mécanique-pnéumatique (105) ; et
- une unité de contrôle (003) pour des vannes magnétiques, qui est configurée pour contrôler le déplacement du piston (105) ;
dans lequel, le dispositif d'extraction automatique comprend en outre :
- un support métallique (104) pour soutenir le piston (105) ; et
- un récipient en verre (111) pour l'extraction des PUF qui est fixé au support métallique (104).

3. Un système d'extraction automatique selon la revendication 2, dans lequel le moyen pour fournir des cycles de compression et décompression des PUF comprend en outre :
- une pompe à pression sans huile avec une membrane en Teflon (005) configurée pour atteindre le déplacement du piston mécanique-pneumatique (105) par compression d'air ambiante, la pompe à pression sans huile avec membrane en Teflon (005) étant configurée pour envoyer l'air comprimé à travers de tubes (001, 002) à une connexion rapide d'une vanne d'entrée (302) dans le piston (105) ;
- un dépôt d'huile (004) configuré pour fournir du lubrifiant pour former une couche d'huile sur une tige du piston (106) et pour permettre la formation d'un aérosol d'air contenant des particules d'huile très petites en suspension et pour empêcher toute contamination possible par l'huile du système ;
- une attache en Teflon (107) située dans une extrémité inférieure de la tige du piston (106), qui a une conicité scellée dans sa partie supérieure telle que la conicité retient inévitablement toute goute qui puisse tomber de la couche d'huile de la tige du piston (106) et empêche la contamination de l'extrémité inférieure de l'attache en Teflon (107) ; dans lequel l'attache en Teflon (107) est formée avec deux parties indépendantes (107A, 107B) de façon qu'une contamination est empêchée, empêchant ainsi la contamination accidentelle d'une tige d'une lame de compression en verre (108) qui est configurée pour fonctionner au-dessous des PUF;
- un capteur d'huile (007) dans l'extrémité d'un tube (006) qui relie une connexion rapide d'une vanne de sortie (303) de l'air comprimé du piston (105) avec le capteur d'huile (007) ; le capteur (007) pouvant être lavé et sa hotte étant connectée à un tube de sortie (008) de façon à évacuer définitivement l'air comprimé résiduel du système vers l'extérieur ;
dans lequel le piston pneumatique (105) a une vis de régulation (305, 306) dans une entrée et dans la sortie de l'air comprimé, les vis (305, 306) sont configurées pour réguler mécaniquement le déplacement de la tige du piston (106) de façon à ajuster le récipient en verre (111) pour l'extraction des PUF à des types différents de PUF de tailles et densités différentes, des volumes de solvant d'extraction différents, et des procédés d'extraction différents, contrôlant ainsi la magnitude de la pression appliquée aux PUF pendant la compression et l'expansion et améliorant l'efficience de l'extraction ; dans lequel le piston mécanique-pnéumatique (105) utilise de l'air comprimé d'un tube de sortie (001) configuré pour transporter l'air comprimé jusqu'au piston (105) entrant à travers la vanne d'entrée (302), de l'air de retour sort à travers la vanne de sortie (303) et il est conduit par un tube (002) jusqu'à l'entrée de l'unité de contrôle (303) ; dans lequel le dépôt d'huile (004) est configuré pour mélanger l'air, comprimé par la pompe à pression sans huile avec membrane en Teflon (005), avec de l'huile afin de lubrifier le piston (105) en transportant de l'air ainsi préparé jusqu'à une vanne magnétique reliée au tube de sortie (001) dirigé vers le piston (105), l'air résiduel qui est rejeté une fois qu'il est passé à travers le piston (105), et sort de l'unité de contrôle (003) à travers un tube de sortie (006) et atteint le capteur d'huile (007) pour être rejeté finalement vers l'extérieur du laboratoire à travers le tube de sortie (008).

4. Un système d'extraction automatique selon la revendication 3, dans lequel l'unité de contrôle (003) est configurée pour contrôler une pluralité de vannes magnétiques de façon à permettre la réalisation du déplacement du piston moyennant un API qui a un écran ACL et qui est configuré pour permettre la programmation de différents procédés d'extraction de PUF en augmentant la compression, sur la base d'une pression supérieure ou inférieure du piston contrôlant la quantité d'air qui est comprimé, dans lequel l'unité de contrôle (003) a en outre une série d'éléments électroniques tels que des différentiels, des alarmes acoustiques ou lumineuses qui indiquent la finalisation d'une séquence de fonctionnement configurés pour permettre de déterminer les intervalles de temps de pression versus des pauses, et le temps d'extraction total ; dans lequel l'unité de contrôle (003) est configurée en outre pour permettre l'utilisation de PUF ayant une épaisseur et/ou des densités différentes ; et de façon additionnelle pour comprimer le PUF pour le laisser si libre que possible de solvants d'extraction, parmi d'autres.

5. Un système d'extraction automatique selon la revendication 2, dans lequel le support métallique (104) se compose d'un support en duralium cylindrique (101) visé à un pied en fer (115) inséré dans une plateforme en plastique et configuré pour l'attachement du piston mécanique-pneumatique (105) ; dans lequel le support cylindrique (101) a une vis de fixation (102) dans sa partie supérieure configurée pour permettre le réglage de la hauteur à laquelle le support (101) est situé ; le piston mécanique-pneumatique (105) est visé et fixé au support cylindrique (101) sur le support métallique (104) avec des vis de réglage (305, 306) configurées pour contrôler le déplacement de la tige du piston (106) ; des brides de fixation circulaires en plastique (110, 112) sont fournies pour supporter le récipient en verre (111) pour l'extraction du PUF, par ses parties supérieure et inférieure ; les brides de fixation circulaires en plastique (110, 112) ont deux parties, une qui entoure le support cylindrique (101) avec un boulon fileté ailé pour fixer et assurer et une seconde partie qui entoure le récipient en verre (111) pour l'extraction du PUF.

6. Un système d'extraction automatique selon la revendication 2, dans lequel le récipient en verre (111) pour l'extraction du PUF est fait en verre borosilicaté et a une ouverture (905) configurée pour permettre l'insertion du PUF dans le système d'extraction ; l'ouverture (905) est une partie femelle conique en verre dépoli qui peut être raccordée à une partie supérieure (904) constituée par une partie mâle conique en verre dépoli configurée pour permettre la fermeture hermétique du récipient d'extraction afin d'empêcher des déversements de solvant pendant l'extraction et pour empêcher aussi des surpressions produites par le solvant évaporé pendant le procédé de compression et expansion du PUF, la partie supérieure (904) est munie d'une vanne en Teflon (902) configurée pour être ouverte à volonté pendant le procédé pour introduire des nouvelles parties de solvant ou pour changer le solvant d'extraction, la partie supérieure (904) est munie d'une partie femelle conique dépolie (903A) qui a un couvercle en verre mâle conique dépoli (903B) configuré pour permettre la fermeture hermétique du récipient d'extraction (111) ; une ouverture mâle en verre avec un filetage extérieur (901) configurée pour permettre l'accouplement d'un adaptateur en Teflon (109) configuré comme guidage pour une tige d'une lame de compression (108) de façon qu'il peut être inséré et déplacé dans la forme correcte et verticale dans le récipient en verre (111) pour l'extraction du PUF ; une vanne en Teflon (907) accouplée à une partie mâle conique en verre dépoli (908) pour enlever du solvant d'extraction du récipient d'extraction (111) est configurée de façon à permettre la connexion d'un ballon à fond arrondi (114) directement avec le récipient d'extraction (111) de façon que lorsque la vanne en Teflon (907) est ouverte, le liquide es versé directement dans le ballon de distillation (114) qui a une ouverture compatible avec la partie mâle conique en verre dépoli (908), dans lequel la partie mâle en verre (908) a un élément de raccordement à tuyau ouvert configuré pour permettre le nivellement des pressions pendant l'élimination du solvant d'extraction du récipient d'extraction (111) facilitant ainsi l'écoulement de liquide vers le ballon de distillation (114).

7. Un système d'extraction automatique selon la revendication 1, dans lequel le dispositif de séchage pour le PUF comprend un couvercle qui a une partie supérieure (1201) avec un coin pour l'accouplement avec une partie inférieure (1206) et il a une fente pour accueillir un joint torique en silicone (1202) ; dans lequel le joint torique (1202) est configuré pour tenir de façon ferme et hermétique un verre transparent (1204) qui est ajusté dans le coin entre la partie supérieure (1201) et l'inférieure du couvercle et qui est configuré comme une fenêtre pour surveiller le procédé de séchage ; la partie inférieure (1206) a aussi une fente pour accueillir un autre joint torique en silicone (1205) similaire à l'antérieur en forme et fonction ; le verre transparent (1204) a sur son centre une partie mâle métallique (1203A) avec un filetage Sweglook intérieur et extérieur pour le raccordement à la ligne de N₂ chaud moyennant un écrou Sweglook de façon à permettre l'entrée du N₂ dans le récipient de séchage (1101) pour le PUF ; un écrou de blocage (1203B) est fourni en outre pour sceller de façon hermétique la connexion d'entrée de N₂ contre le verre (1204), l'écrou de blocage (1203B) ayant un filetage extérieur configuré pour le viser à la partie mâle métallique (1203A), toutes deux pièces (1203B, 1203A) sont scellées contre le verre (1204) avec des joints toriques (1210A, 1210B) ayant un diamètre approprié ; un support de PUF (1207) est situé dans une partie inférieure (1208) du récipient de séchage (1101) pour le PUF, ou corps du récipient ; des éléments d'attache métalliques sont fournis pour l'accouplement du couvercle et du corps du récipient, dans lequel les éléments d'attache sont ajustables pour atteindre une étanchéité maximale, scellant ainsi de façon hermétique le récipient de séchage (1101) pour le PUF.

8. Un système d'extraction automatique selon la revendication 1, dans lequel la ligne (1102) d'azote (N₂) ultra pur chaud se compose d'un cylindre de N₂ (1109) avec une pression prédéterminée, qui est configurée pour être réduite en utilisant un manomètre secondaire à 400 kPa (4 bar), un tuyau configuré de façon que du N₂ à 400 kPa (4 bar) atteint une hotte d'extraction (1103) et est relié à celle-ci moyennant une vanne à aiguille pour une régulation grossière du débit (1106) qui est simultanément reliée à une vanne à aiguille pour la régulation fine du débit (1105) ; dans lequel la ligne d'alimentation en azote (N₂) chaud (1102) est simultanément connectée et contrôlée moyennant la vanne pour la régulation fine du débit (1105), dans lequel une couverture munie de résistances électriques qui sont régulées et contrôlées par un thermostat est fournie pour la régulation thermique de la ligne de N₂ (1102) de façon à maintenir la température de cette ligne (1102) à environ 70 °C ; atteignant ainsi le séchage du PUF en enlevant le solvant résiduel retenu dans le PUF.

9. Un système d'extraction automatique selon la revendication 7, dans lequel le support de PUF (1207) se compose d'un premier support (1301) pour le PUF d'un premier diamètre qui reste sur une grille métallique ayant des orifices (1302) de 1 cm ; le premier support (1301) est soutenu par des pieds cylindriques (1304) qui le séparent d'un second support qui a les mêmes dimensions que le premier support (1301) de façon qu'il peut être utilisé pour les PUF ayant un second diamètre qui est plus petit que le premier diamètre ; le second support restant aussi sur des pieds cylindriques pour le séparer de la partie inférieure (1208) du récipient de séchage (1101) du PUF de façon à permettre l'écoulement libre de N₂.

10. Procédé d'extraction automatique de contaminants atmosphériques gazeux, qui sont retenus dans des filtres en mousse de polyuréthane (PUF), dans lequel le procédé comprend les étapes suivantes :
- extraire les composés chimiques d'intérêt du PUF ou nettoyer le PUF, en utilisant une séquence de solvants organiques, où le PUF doit être immergé, moyennant un procédé d'extraction ou nettoyage sur la base de cycles de compression et décompression du PUF ;
- sécher les PUF moyennant balayage de solvant avec du N₂ ultra pur gazeux chaud, élimination du solvant jusqu'à la siccité du PUF ; et
- vérifier par chromatographie la netteté du PUF.

11. Procédé d'extraction automatique selon la revendication 10, dans lequel dans l'étape d'extraction des composés chimiques d'intérêt on utilise une séquence de solvants organiques où le PUF doit être immergé, moyennant un procédé d'extraction sur la base de cycles de compression et décompression du PUF ; cela est atteint moyennant un piston mécanique-pnéumatique ; une unité de contrôle pour des vannes magnétiques, qui permettent de contrôler le déplacement du piston ; un support métallique ; un récipient en verre pour l'extraction du PUF attaché à tel support.

12. Procédé d'extraction automatique selon la revendication 10, dans lequel l'étape de séchage du PUF nettoyé par balayage du solvant avec du N₂ ultra pur chaud gazeux, élimination du solvant jusqu'à atteindre la siccité du PUF ; est effectuée dans un récipient de séchage pour le PUF fait en acier inoxydable ; et une ligne d'alimentation en azote (N₂) ultra pur chaud.

13. Procédé d'extraction automatique selon l'une quelconque des revendications 10 - 12, incluant en outre l'étape de stocker le PUF nettoyé et séché pour empêcher sa contamination avant d'atteindre l'endroit d'échantillonnage, moyennant l'emballage dans une feuille d'aluminium nettoyée auparavant avec de l'acétone par les deux côtés et séchée sous une hotte sous des conditions de netteté absolue et stockée dans un récipient en verre avec un couvercle hermétique ; le récipient en verre est aussi emballé dans une feuille d'aluminium et stocké dans l'obscurité.

14. Procédé d'extraction automatique selon la revendication 10, dans lequel la séquence de solvants d'extraction pour extraire les composés chimiques d'intérêt du PUF sont des solvants organiques ayant des polarités différentes, et l'extraction est effectuée pendant 4 étapes de 15 minutes chacune, dans lequel chaque période se compose de 3 cycles de compression et décompression du PUF de 5 minutes de durée chacun ; initiant l'extraction avec 80 ml de toluène pendant les trois premières étapes, et finissant l'extraction en utilisant 80 ml de n-hexane pendant la dernière étape.

15. Procédé d'extraction automatique selon la revendication 10, dans lequel la séquence de solvants organiques utilisée pour nettoyer le PUF est initiée en utilisant une séquence de solvants d'extraction, pendant 4 étapes de 15 minutes de durée chacune, dans lequel chaque étape se compose de 3 cycles de compression et décompression du PUF de 5 minutes de durée chacune ; initiant le nettoyage dans la première période en utilisant 80 ml d'eau de qualité Milli-Q et, puis, dans la deuxième étape en utilisant 80 ml d'acétone, dans la troisième étape en utilisant 80 ml de toluène, et finissant la dernière étape en utilisant 80 ml de n-hexane.
